# EUROPÄISCHE PATENTSCHRIFT

(11) **EP 4 269 193 B1**
(45) Veröffentlichungstag und Bekanntmachung des Hinweises auf die Patenterteilung: **08.10.2025**
(21) Anmeldenummer: 22170345.7
(22) Anmeldetag: 27.04.2022
(51) Int. Cl.: B60T 8/32, B60T 8/17, B60T 8/88, B60T 8/34

(54) **ELEKTRONISCH GESTEUERTES PNEUMATISCHES BETRIEBSBREMSSYSTEM EINES FAHRZEUGS MIT ELEKTRO-PNEUMATISCHER REDUNDANZ**
ELECTRONICALLY CONTROLLED PNEUMATIC BRAKE SYSTEM OF A VEHICLE WITH ELECTRO-PNEUMATIC REDUNDANCY
SYSTÈME PNEUMATIQUE DE FREINAGE DE SERVICE À COMMANDE ÉLECTRONIQUE D'UN VÉHICULE À REDONDANCE ÉLECTRO-PNEUMATIQUE

(43) Veröffentlichungstag der Anmeldung: 01.11.2023
(73) Patentinhaber: KNORR-BREMSE Systeme für Nutzfahrzeuge GmbH, 80809 München (DE)
(72) Erfinder: JUNDT, Oliver, 74394 Hessigheim (DE); HECKER, Falk, 71706 Markgröningen (DE); LEIBBRAND, Jonas, 71735 Eberdingen-Nußdorf (DE)

(56) Entgegenhaltungen:
- WO-A1-95/16594
- DE-A1- 102017 113 336

## Beschreibung

Die Erfindung betrifft ein elektronisch gesteuertes pneumatisches Betriebsbremssystem eines Fahrzeugs, gemäß dem Oberbegriff von Anspruch 1.

Ein solches elektronisch gesteuertes pneumatisches Betriebsbremssystem ist aus EP 3 344 503 B1 bekannt. Bei dem bekannten Betriebsbremssystem sind ein erstes Bremsventil in Form eines Fußbremsventils mit einem elektrischen Kanal und zwei pneumatischen Kanälen und ein zweites Bremsventil in Form eines 2-Kanal-Druckregelmoduls vorhanden. Abhängig von einer Betätigung eines Fußbremspedals des ersten Bremsventils erzeugt dieses in seinen beiden pneumatischen Kanäle erste Bremsventil-Steuerdrücke für ein erstes Steuerventil an der Vorderachse und für ein zweites Steuerventil an der Hinterachse. Parallel werden im Sinne einer Redundanz durch das zweite Bremsventil in seinen beiden Kanälen zweite Bremsventil-Steuerdrücke für das erste Steuerventil an der Vorderachse und für das zweite Steuerventil an der Hinterachse erzeugt. Dabei wird entweder der jeweils größere Steuerdruck zwischen den ersten Bremsventil-Steuerdrücken und den zweiten Bremsventil-Steuerdrücken oder eine Summe aus beiden an das erste Steuerventil und an das zweite Steuerventil ausgegeben. Durch den genannten Aufbau wird zwar eine elektrische und pneumatische Redundanz zur Verfügung gestellt, der Bau- und Montageaufwand ist aber wegen der doppelten Verrohrungen oder doppelten pneumatischen Leitungen je Bremskreis für die ersten und zweiten Bremsventil-Steuerdrücke relativ groß.

DE 10 2017 113336 A1 offenbart eine elektropneumatische Bremsanlage mit einem Fahrerassistenzsystem oder einer Autopiloteinrichtung. WO 95/16594 A1 offenbart eine elektropneumatische Bremsanlage mit zwei Druckmodulatoren.

Der vorliegenden Erfindung liegt die Aufgabe zugrunde, ein elektronisch gesteuertes pneumatisches Betriebsbremssystem derart weiter zu bilden, dass sich ein geringer Bau- und Montageaufwand bei gleichzeitig großer Variabilität bei den Steuerungsmöglichkeiten ergibt.

Diese Aufgabe wird erfindungsgemäß durch die Merkmale von Anspruch 1 gelöst.

### Offenbarung der Erfindung

Die Erfindung geht aus von einem elektronisch gesteuerten pneumatischen Betriebsbremssystem eines Fahrzeugs, welches wenigstens Folgendes aufweist:
a) Eine erste elektronische Steuerung,
b) wenigstens einen Bremskreis mit wenigstens einem Steuerventil, wobei das Steuerventil ausgebildet ist, um in dem wenigstens einen Bremskreis einen Bremsdruck für wenigstens einen Betriebsbremsaktuator einzustellen oder einzuregeln, wobei
c) das wenigstens eine Steuerventil wenigstens einen elektrischen Steuereingang zum Aufnehmen eines primären elektrischen Steuersignals und wenigstens einen pneumatischen Steuereingang zum Aufnehmen eines sekundären pneumatischen Steuerdrucks sowie einen pneumatischen Arbeitsausgang aufweist, und
d) das wenigstens eine Steuerventil abhängig von dem primären elektrischen Steuersignal oder von dem sekundären pneumatischen Steuerdruck über den pneumatischen Arbeitsausgang den wenigstens einen Betriebsbremsaktuator mit dem Bremsdruck versorgt, und wobei
e) die erste elektronische Steuerung ausgebildet ist, um abhängig von einem primären elektrischen Bremsanforderungssignal das primäre elektrische Steuersignal zu erzeugen und in den elektrischen Steuereingang des wenigstens einen Steuerventils einzusteuern,
f) Bremsanforderungssignal-Erzeugungsmittel mit wenigstens einem elektrischen Ausgang und wenigstens einem pneumatischen Ausgang, welches ausgebildet ist, um gemäß einer Fahrzeug-Sollverzögerung an dem wenigstens einen elektrischen Ausgang das primäre elektrische Bremsanforderungssignal zu erzeugen und in die erste elektronische Steuerung einzusteuern, und um an dem wenigstens einen pneumatischen Ausgang wenigstens einen primären pneumatischen Steuerdruck zu erzeugen,
g) eine pneumatische Verbindung, welche zwischen dem wenigstens einen pneumatischen Ausgang der Bremsanforderungssignal-Erzeugungsmittel (FBM) und dem pneumatischen Steuereingang des wenigstens einen elektropneumatischen Steuerventils gezogen ist.

Die Erfindung sieht dann vor, dass
h) in der pneumatischen Verbindung eine elektronisch gesteuerte, elektro-pneumatische Komponente angeordnet ist, welche wenigstens einen Steuerdruckeingang zum Einsteuern des primären pneumatischen Steuerdrucks und wenigstens einen Steuerdruckausgang zum Aussteuern des sekundären pneumatischen Steuerdrucks aufweist, welcher in den pneumatischen Steuereingang des wenigstens einen elektropneumatischen Steuerventils eingesteuert wird, wobei
i) die elektronisch gesteuerte, elektro-pneumatische Komponente derart ausgebildet ist, dass sie den sekundären pneumatischen Steuerdruck
   i1) ausschließlich abhängig von dem primären pneumatischen Steuerdruck, oder
   i2) ausschließlich abhängig von einem sekundären elektrischen Steuersignal, oder
   i3) sowohl abhängig von dem primären pneumatischen Steuerdruck als auch abhängig von dem sekundären elektrischen Steuersignal erzeugt, moduliert oder bildet.

Unter einer elektronisch gesteuerten, elektro-pneumatischen Komponente ist jegliche Komponente zu verstehen, welche durch eine Elektronik steuer- und/oder regelbar ist und welche pneumatische und/oder elektropneumatische Elemente wie beispielsweise Magnetventile und optional auch Relaisventile umfasst. Auch kann eine Steuerelektronik in der elektronisch gesteuerten, elektro-pneumatischen Komponente integriert oder von dieser umfasst sein.

Eine Erzeugung oder Bildung des sekundären pneumatischen Steuerdrucks (ausschließlich oder nicht ausschließlich) abhängig von dem primären pneumatischen Steuerdruck kann beispielsweise dadurch realisiert werden, dass der primäre pneumatische Steuerdruck durch die elektronisch gesteuerte, elektro-pneumatische Komponente gemessen und auf der Basis des Messwerts für den primären pneumatischen Steuerdruck dann der sekundäre pneumatischen Steuerdrucks von der elektronisch gesteuerten, elektro-pneumatischen Komponente gebildet oder erzeugt wird. Dabei können der primäre pneumatische Steuerdruck und der sekundäre pneumatische Steuerdruck voneinander pneumatisch getrennt sein.

Wenn der sekundäre pneumatische Steuerdruck unabhängig von dem primären pneumatischen Steuerdruck und ausschließlich auf der Basis des sekundären elektrischen Steuersignal erzeugt oder gebildet wird, so kann dies bedeuten, dass zwar ein primärer pneumatischer Steuerdruck erzeugt, dieser aber von der elektronisch gesteuerten, elektro-pneumatischen Komponente bei der Bildung oder beim Erzeugen des sekundären pneumatischen Steuerdrucks ignoriert oder nicht herangezogen wird. Wenn daher zwar ein primärer pneumatischer Steuerdruck gemäß einer Soll-Fahrzeugverzögerung erzeugt wird, die der Fahrer des Fahrzeugs beispielsweise über ein Bremspedal vorgibt, so wird in diesem Fall der Fahrerwunsch jedoch nicht berücksichtigt. Dies kann beispielsweise dann sinnvoll sein, wenn bei elektrischen Fahrzeugen rekuperiert werden soll oder ein Retarder anstatt einer Reibungsbremse zum Einsatz kommen soll. Dies ist vor allem bei langen Bergabfahrten vorteilhaft, um die Reibungsbremsen nicht zu überhitzen.

Alternativ könnte aber auch gar kein primärer pneumatischer Steuerdruck erzeugt werden, beispielsweise weil eine Erzeugung des primären pneumatischen Steuerdrucks wegen einer Störung im pneumatischen Backup-Bremskreis verhindert ist, aber dann dennoch von der elektronisch gesteuerten, elektro-pneumatischen Komponente der sekundäre pneumatische Steuerdruck auf der Basis des sekundären elektrischen Steuersignals erzeugt oder gebildet werden. In diesem Fall wird dann durch die elektronisch gesteuerte, elektro-pneumatische Komponente eine elektro-pneumatische Redundanz für den pneumatischen Backup-Bremskreis zur Verfügung gestellt.

Ebenfalls kein primärer pneumatischer Steuerdruck wird erzeugt, wenn der Fahrer unaufmerksam ist und, obwohl eine Bremsung aufgrund einer kritischen Situation notwendig wäre, nicht bremst. Dann sorgt das beispielsweise durch ein Fahrerassistenzsystem wie ACC (Adaptive Cruise Control) oder durch eine Autopiloteinrichtung initiierte sekundäre elektrische Steuersignal für eine Erzeugung und/oder eine Modulation des sekundären pneumatischen Steuerdrucks.

Wenn der Fahrer zwar durch eine Betätigung eines Fußbremspedals zwar eine Bremsung mit einer vom Bremswunsch des Fahrers abhängigen Soll-Fahrzeugverzögerung anfordert, so kann auch parallel dazu noch von einem Fahrerassistenzsystem eine demgegenüber höhere Soll-Fahrzeugverzögerung oder auch geringere Soll-Fahrzeugverzögerung vorgegeben werden. Dabei kann die von einem Notbremsassistenten erzeugte Notbremsverzögerung insbesondere größer als die vom Fahrer angeforderte Soll-Fahrzeugverzögerung sein. In diesem Fall kann der sekundäre pneumatische Steuerdruck ausschließlich abhängig von dem sekundären elektrischen Steuersignal der zweiten elektronischen Steuerung erzeugt werden, welches dann auf der von dem Notbremsassistenten vorgegebenen Soll-Fahrzeugverzögerung basiert.

Daneben sind auch Fälle denkbar, in denen der sekundäre pneumatische Steuerdruck ausschließlich abhängig von dem sekundären elektrischen Steuersignal der zweiten elektronischen Steuerung und auch abhängig von dem primären pneumatischen Steuerdruck gebildet, moduliert oder erzeugt wird. Beispielsweise dann, wenn der vorrangige elektro-pneumatische Steuerung ausgefallen ist und der Fahrer mit Hilfe der nachrangigen pneumatischen Steuerung eine Bremsung mit einem Bremsschlupf größer als ein erlaubter Bremsschlupf auslöst. Dann kann durch das sekundäre elektrische Steuersignal der sekundäre pneumatische Steuerdruck derart moduliert werden, dass der Bremsschlupf den erlaubten Bremsschlupf nicht überschreitet. Analoges gilt dann auch für weitere Fahrerassistenzsysteme wie beispielsweise eine Antriebsschlupfregelung oder eine Stabilitätsregelung, welche dann Einfluss auf die Modulation und/oder die Erzeugung des sekundären pneumatischen Steuerdrucks nehmen kann.

Auch bildet die elektronisch gesteuerte, elektro-pneumatische Komponente eine elektro-pneumatische Redundanz aus, wenn die elektrische Ansteuerung des wenigstens einen Steuerventils durch das primäre elektrische Steuersignal verhindert ist, oder wenn nicht beabsichtigt ist, ein primäres elektrisches Steuersignal zu erzeugen.

Bei der Erfindung sind dann das Bremsanforderungssignal-Erzeugungsmittel, die elektronisch gesteuerte, elektro-pneumatische Komponente und das wenigstens eine elektropneumatische Steuerventil in der pneumatischen Verbindung in Reihe geschaltet. Daher ist beispielsweise je Bremskreis vorteilhaft lediglich eine pneumatische Leitung als pneumatische Verbindung je Bremskreis notwendig, welche dann die pneumatische Verbindung bildet.

Es ist bei der Erfindung klar, dass je Bremskreis ein eigener primärer und sekundärer pneumatischer Steuerdruck sowie eine eigene primäres und sekundäres elektrisches Steuersignal individuell erzeugt werden kann.

In den Unteransprüchen sind vorteilhafte Weiterbildungen der in Anspruch 1 angegebenen Erfindung möglich.

Besonders bevorzugt ist die elektronisch gesteuerte, elektropneumatische Komponente derart ausgebildet ist, dass sie Signale
a) eines Fahrerassistenzsystems, und/oder
b) einer Autopiloteinrichtung, und/oder
c) einer Sensoreinrichtung
   empfangen und das sekundäre elektrische Steuersignal abhängig von diesen Signalen erzeugen kann.

Mit dem sekundären elektrischen Steuersignal kann dann der sekundäre pneumatische Steuerdruck moduliert werden.

Bevorzugt umfasst die Sensoreinrichtung wenigstens einen der folgenden Sensoren umfasst: Einen Raddrehzahlsensor, einen Lenkwinkelsensor, einen Gierratensensor, einen Beschleunigungssensor.

Beispielsweise kann die Sensoreinrichtung wenigstens einen Raddrehzahlsensor umfassen, welcher Raddrehzahlsignale wenigstens eines Rads des Fahrzeugs erfasst. Diese Raddrehzahlsignale bilden dann eine Grundlage für eine Bremsschlupfsteuerung (ABS), eine Antriebsschlupfsteuerung (ASR) und/oder für ein Stabilitätsregelsystem (ESP), welche oder welches beispielsweise in der elektronisch gesteuerten, elektropneumatischen Komponente integriert oder implementiert ist, oder mit welcher die elektronisch gesteuerte, elektropneumatische Komponente zusammenwirkt. Ebenso können ein Drehratensensor, ein Lenkwinkelsensor und/oder ein Beschleunigungssensor (Längsbeschleunigung und Querbeschleunigung) in der Sensoreinrichtung enthalten sein, um beispielsweise ein Stabilitätsregelsystem (ESP) zu realisieren.

Daher können in der elektronisch gesteuerten, elektropneumatischen Komponente eine Bremsschlupfregelung (ABS), eine Antriebsschlupfregelung (ASR) und/oder eine Stabilitätsregelung bzw. Fahrdynamikregelung (ESP) implementiert sein, von welcher (welchen) abhängig dann das sekundäre elektrische Steuersignal erzeugt wird. Entsprechend dem sekundären elektrischen Steuersignal wird dann der sekundäre pneumatische Steuerdruck moduliert, insbesondere dann, wenn wenigstens eine Steuer- oder Regelelektronik einen Bestandteil der elektronisch gesteuerten, elektropneumatischen Komponente bildet, in welcher dann die Bremsschlupfregelung (ABS), die Antriebsschlupfregelung (ASR) und/oder die Stabilitätsregelung bzw. Fahrdynamikregelung (ESP) implementiert ist (sind).

Dann ist die elektronisch gesteuerte, elektropneumatische Komponente beispielsweise durch Modulation eines sekundären pneumatischen Steuerdrucks oder mehrerer sekundärer Steuerdrücke abhängig von der Signalen solcher Sensoren in der Lage, je Fahrzeugrad oder je Fahrzeugachse eine Bremsschlupfregelung (ABS) und/oder eine Antriebsschlupfregelung (ASR) und/oder bei dem Fahrzeug eine Stabilitätsregelung bzw. Fahrdynamikregelung (ESP) durchzuführen.

Das Fahrerassistenzsystem wie beispielsweise ein Notbremsassistent oder eine adaptiven Geschwindigkeitsregelung (ACC, Adaptive Cruise Control) umfassen, durch welche dann beispielsweise eine Soll-Fahrzeugverzögerung als Signal vorgegeben wird, welches dann von der elektronisch gesteuerten, elektropneumatischen Komponente empfangen wird, um den sekundären pneumatischen Steuerdruck abhängig von diesem Signal zu modulieren. Auch kann eine Steuerelektronik des Fahrerassistenzsystems bereits in der elektronisch gesteuerten, elektropneumatischen Komponente integriert sein.

Beispielsweise kann die elektronisch gesteuerte, elektropneumatische Komponente an einen Fahrzeugdatenbus angeschlossen sein, auf welchem die Signale verfügbar sind.

Auch kann zwischen den Arbeitsausgang des wenigstens einen elektropneumatischen Steuerventils und den wenigstens einen, von dem wenigstens einen elektropneumatischen Steuerventil mit Bremsdruck versorgten Bremsaktuator ein ABS-Drucksteuerventil geschaltet sein, welches von der elektronisch gesteuerten, elektropneumatischen Komponente gesteuert ist, um diesen Bremsdruck radindividuell oder achsindividuell zu modulieren. Durch ein ABS-Drucksteuerventil kann bekanntermaßen der Bremsdruck zeitweise gehalten, gesteigert oder reduziert werden. An Rädern oder an Achsen des Fahrzeugs, an welchen ein solches ABS-Drucksteuerventil angeordnet ist, kann dann der Bremsdruck radindividuell oder achsindividuell moduliert werden.

Unter einer Modulation eines Drucks soll eine beliebige Veränderung, Anpassung oder Variation des betreffenden Drucks verstanden werden, worunter auch ein Druckhalten fallen kann.

Auch können die Bremsanforderungssignal-Erzeugungsmittel ein Fußbremsmodul mit wenigstens einem elektrischen Kanal und wenigstens einem pneumatischem Kanal umfassen, wobei in dem wenigstens einen elektrischen Kanal das primäre Bremsanforderungssignal und in dem wenigstens einen pneumatischen Kanal der wenigstens eine primäre pneumatische Steuerdruck abhängig von einer Betätigung eines Fußbremspedals des Fußbremsmoduls erzeugt werden. Alternativ oder zusätzlich kommen als Bremsanforderungssignal-Erzeugungsmittel auch solche Bremsanforderungssignal-Erzeugungsmittel in Frage, welche das primäre Bremsanforderungssignal und den wenigstens einen primären pneumatischen Steuerdruck ohne Einwirkung des Fahrers beispielsweise automatisch erzeugen, insbesondere eine Autopiloteinrichtung im Rahmen autonomen Fahrens.

Besonders bevorzugt umfasst die elektronisch gesteuerte, elektropneumatische Komponente eine durch das sekundäre elektrische Steuersignal steuerbare elektromagnetische Steuerventileinrichtung, wobei der sekundäre pneumatische Steuerdruck von der elektromagnetischen Steuerventileinrichtung abhängig von dem sekundären elektrischen Steuersignal erzeugt wird.

Auch kann die elektronisch gesteuerte, elektropneumatische Komponente eine zweite elektronische Steuerung sowie wenigstens einen Drucksensor umfassen, welcher den primären pneumatischen Steuerdruck erfasst und entsprechende Drucksignale in die zweite elektronische Steuerung einsteuert, welche abhängig von den Drucksignalen das sekundäre elektrische Steuersignal erzeugt.

Die zweite elektronische Steuerung kann dabei eine integrierte zweite elektronische Steuerung oder aber auch auf mehrere zweite elektronische Steuerungen verteilt sein.

Bevorzugt wird das sekundäre elektrische Steuersignal abhängig von einem sekundären elektrischen Bremsanforderungssignal ist, welches eine Fahrzeug-Sollverzögerung oder einen Druck-Sollwert repräsentiert.

Das sekundäre elektrische Bremsanforderungssignal kann von einem Fahrerassistenzsystem wie beispielsweise einem Notbremsassistenten, einer adaptiven Geschwindigkeitsregelung (ACC, Adaptive Cruise Control) oder von einer Autopiloteinrichtung erzeugt werden.

Genz besonders bevorzugt kann das Betriebsbremssystem wenigstens ein Druckregelmodul umfassen, welches wenigstens Folgendes aufweist:
a) Wenigstens einen Druckregelmodul-Vorratsanschluss zum Verbinden mit einem unter Vorratsdruck stehenden Druckluftvorrat,
b) wenigstens einen elektrischen Druckregelmodul-Steuereingang, wenigstens einen pneumatischen Druckregelmodul-Steuereingang, wenigstens einen mit einer Drucksenke verbundenen Druckregelmodul-Entlüftungsausgang und wenigstens einen Druckregelmodul-Arbeitsausgang,
c) wenigstens ein mit dem elektrischen Druckregelmodul-Steuereingang elektrisch verbundenes elektronisches Steuergerät,
d) wenigstens eine von dem elektronischen Steuergerät gesteuerte elektro-magnetische Einlass-/Auslass-Ventilkombination, welche einerseits mit dem Druckregelmodul-Vorratsanschluss zur Versorgung mit Vorratsdruck und andererseits mit dem Druckregelmodul-Entlüftungsausgang zur Entlüftung verbunden ist,
e) ein von der elektro-magnetischen Einlass-/Auslass-Ventilkombination durch einen pneumatischen Relaissteuerdruck an seinem pneumatischen Steueranschluss gesteuertes Relaisventil, welches abhängig von dem Relaissteuerdruck aus dem Vorratsdruck an dem Druckregelmodul-Arbeitsausgang einen Arbeitsdruck moduliert,
f) wenigstens einen Drucksensor, welcher den Arbeitsdruck am Druckregelmodul-Arbeitsausgang erfasst und einen entsprechenden Ist-Druckwert in das elektronische Steuergerät einsteuert,
g) ein elektromagnetisches Backup-Ventil, welches einerseits an den pneumatischen Druckregelmodul-Steuereingang und andererseits an den pneumatischen Steueranschluss des Relaisventils angeschlossen ist und welches bestromt in einer Sperrstellung den pneumatischen Druckregelmodul-Steuereingang gegenüber dem pneumatischen Steueranschluss des Relaisventils absperrt und unbestromt in einer Durchlassstellung den pneumatischen Druckregelmodul-Steuereingang mit dem pneumatischen Steueranschluss des Relaisventils verbindet, wobei
h) das elektronische Steuergerät ausgebildet ist, dass es die elektro-magnetische Einlass-/Auslass-Ventilkombination derart ansteuert, dass der Ist-Druckwert auf einen Soll-Druckwert eingeregelt wird, welches durch ein in den elektrischen Druckregelmodul-Steuereingang einsteuerbares elektrisches Signal repräsentiert wird.

Die elektropneumatische Steuerventileinrichtung, welche die elektronisch gesteuerte, elektropneumatische Komponente bevorzugt umfasst, kann dann wenigstens ein Druckregelmodul umfasst, bei welchem
a) der pneumatische Druckregelmodul-Steuereingang den Steuerdruckeingang zum Einsteuern des primären pneumatischen Steuerdrucks, und
b) der Druckregelmodul-Arbeitsausgang den Steuerdruckausgang zum Aussteuern des sekundären pneumatischen Steuerdrucks bildet, und
c) der Druckregelmodul-Vorratsanschluss an wenigstens einen Druckluftvorrat angeschlossen ist, und
d) in den elektrischen Druckregelmodul-Steuereingang das sekundäre elektrische Steuersignal einsteuerbar ist.

Auch kann die elektropneumatische Steuerventileinrichtung ausgebildet sein, dass wenn insbesondere von der zweiten elektronischen Steuerung kein sekundäres elektrisches Steuersignal erzeugt wird, d.h. wenn keine elektropneumatische Steuerung gewünscht oder verhindert ist, das elektromagnetische Backup-Ventil in die Durchlassstellung schaltet, wobei dann das Relaisventil den sekundären pneumatischen Steuerdruck abhängig von dem primären pneumatischen Steuerdruck an dem Druckregelmodul-Arbeitsausgang erzeugt oder bildet. Da das elektromagnetische Backup-Ventil bevorzugt durch Federmittel in seine Durchlassstellung vorgespannt ist und daher unbestromt automatisch in die Durchlassstellung schaltet, ist diese Funktionalität auf einfache Weise darstellbar. Andererseits schaltet das elektromagnetische Backup-Ventil bestromt dann gegen die Wirkung der Federmittel in seine Sperrstellung, wodurch der primäre pneumatische Steuerdruck nicht bis zu dem Relaisventil gelangen und dann keine Wirkung entfalten kann.

Andernfalls, wenn insbesondere von der zweiten elektronischen Steuerung ein sekundäres elektrisches Steuersignal erzeugt und in das elektronische Steuergerät der elektropneumatischen Steuerventileinrichtung eingesteuert wird, schaltet das dann bestromte elektromagnetische Backup-Ventil in die Sperrstellung, wodurch der primäre pneumatische Steuerdruck nicht bis zu dem Relaisventil gelangen und dann keine Wirkung entfalten kann. Dann aber steuert das elektronische Steuergerät der elektropneumatischen Steuerventileinrichtung abhängig von dem sekundären elektrischen Steuersignal die elektro-magnetische Einlass-/Auslass-Ventilkombination an, um durch das Relaisventil an dem Druckregelmodul-Arbeitsausgang den sekundären pneumatischen Steuerdruck zu erzeugen oder zu bilden.

Besonders bevorzugt kann das wenigstens eine elektromagnetische Steuerventil ein Druckregelmodul umfassen, bei welchem
a) der pneumatische Druckregelmodul-Steuereingang den Steuerdruckeingang zum Einsteuern des sekundären pneumatischen Steuerdrucks bildet, und
b) der Druckregelmodul-Arbeitsausgang den Arbeitsausgang zum Aussteuern des Bremsdrucks für den wenigstens einen Betriebsbremsaktuatorbildet,
c) der Druckregelmodul-Vorratsanschluss an wenigstens einen Druckluftvorrat angeschlossen ist,
d) der elektrische Druckregelmodul-Steuereingang an die erste elektronische Steuerung angeschlossen ist, zum Einsteuern des primären elektrischen Steuersignals.

Wie oben bereits ausgeführt, kann die elektronisch gesteuerte, elektro-pneumatische Komponente eine elektro-pneumatisch gesteuerte Redundanz ausbildet, wenn die elektrische Ansteuerung des wenigstens einen Steuerventils durch das primäre elektrische Steuersignal verhindert ist, oder wenn nicht beabsichtigt ist, ein primäres elektrisches Steuersignal zu erzeugen.

Das Betriebsbremssystem kann insbesondere ein konventionelles elektronisch geregeltes Betriebsbremssystem mit Bremsdruckregelung (EBS) umfassen, welches (nachträglich) durch die elektronisch gesteuerte, elektro-pneumatische Komponente ergänzt worden ist oder in welchem die elektronisch gesteuerte, elektro-pneumatische Komponente eine Nachrüst-Komponente darstellt. Dabei ist der Nachrüstaufwand vorteilhaft gering.

Auch kann die elektronisch gesteuerte, elektro-pneumatische Komponente ausgebildet sein, dass sie Steuersignale für eine Steuerung einer Antriebsmaschine des Fahrzeugs (insbesondere zur Realisierung einer Antriebsschlupfregelung ASR), und/oder für eine Steuerung eines Retarders erzeugt.

### Zeichnung

Nachstehend sind Ausführungsbeispiele der Erfindung in der Zeichnung dargestellt und in der nachfolgenden Beschreibung näher erläutert. In der Zeichnung zeigt
- Fig. 1: ein schematisches Schaltbild eines elektronisch gesteuerten pneumatischen Betriebsbremssystems eines Nutzfahrzeugs gemäß einer bevorzugten Ausführungsform der Erfindung mit einer bevorzugten Ausführungsform einer elektronisch gesteuerten, elektro-pneumatischen Komponente;
- Fig. 2: ein schematisches Schaltbild der elektronisch gesteuerten, elektro-pneumatischen Komponente von Fig. 1, welche bevorzugt als Druckregelmodul ausgebildet ist.

### Beschreibung der Ausführungsbeispiele

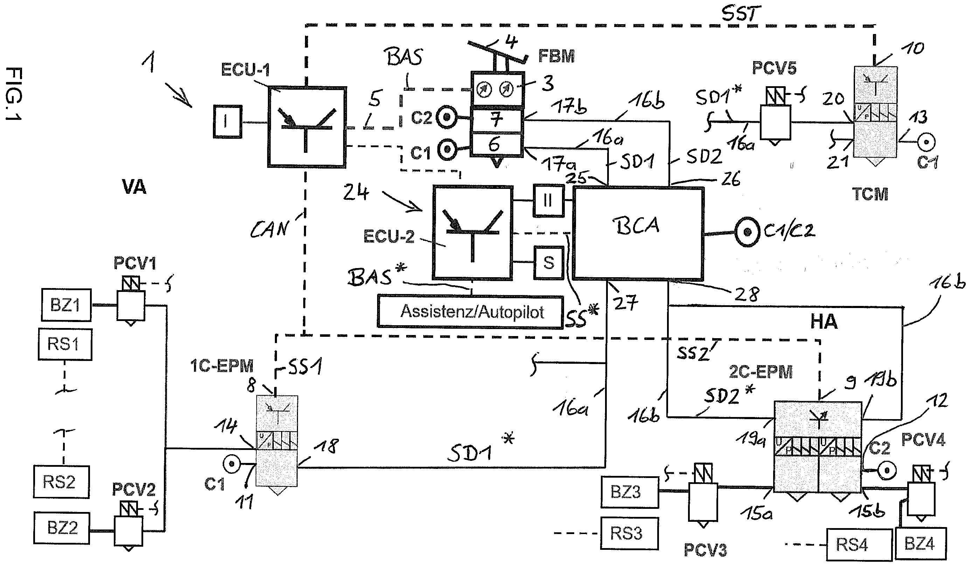

In **Fig.1** ist eine bevorzugte Ausführungsform eines elektronisch gesteuerten pneumatischen Betriebsbremssystems 1 eines Nutzfahrzeugs gezeigt, welches insbesondere ein elektronisch geregeltes Betriebsbremssystem mit Bremsdruckregelung (EBS) bildet. Das Nutzfahrzeug ist vorzugsweise zum Ziehen wenigstens eines Anhängers ausgebildet.

Das elektronisch gesteuerte pneumatischen Betriebsbremssystem 1 umfasst hier einen Vorderachsbremskreis als ersten Betriebsbremskreis, einen Hinterachsbremskreis als zweiten Betriebsbremskreis und einen Anhängerbremskreis. Weiterhin beinhaltet das elektronisch gesteuerte pneumatische Betriebsbremssystems 1 ein Fußbremsmodul FBM, welches für den ersten Betriebsbremskreis und den Anhängerbremskreis einen ersten pneumatischen Kanal 6 und für den zweiten Betriebsbremskreis einen zweiten pneumatischen Kanal 7 aufweist, welche wie üblich von jeweils einem Fußbremsventil betätigt werden. Weiterhin umfasst das Fußbremsmodul FBM auch einen elektrischen Kanal 3 mit wenigstens einem elektrischen Bremswertgeber, hier vorzugsweise zwei redundante Bremswertgeber, welche die Betätigung des Pedalwegs oder Pedalwinkels eines Fußbremspedals 4 über ein Weg- oder Winkelmesssystem messen, wobei sowohl die Fußbremsventile als auch der elektrische Bremswertgeber von dem Fußbremspedal 4 betätigt werden. Die elektrischen Bremswertgeber erzeugen dann abhängig von einer Betätigung des Fußbremspedals 4 ein primäres elektrisches Bremsanforderungssignal BAS und in dem ersten pneumatischen Kanal 6 einen ersten primären pneumatischen Steuerdruck SD1 für den ersten Betriebsbremskreis (Vorderachsbremskreis) und den Anhängerbremskreis sowie in dem zweiten pneumatischen Kanal 7 einen zweiten primären pneumatischen Steuerdruck SD2 für den zweiten Betriebsbremskreis (Hinterachsbremskreis). Durch die Betätigung des Fußbremspedals 4 kann eine bestimmte Soll-Fahrzeugverzögerung durch den Fahrer vorgegeben werden.

Der erste pneumatische Kanal 6, der erste Betriebsbremskreis und der Anhängersteuerkreis werden von einem ersten Druckluftvorrat C1 und der zweite pneumatische Kanal 7 und auch der zweite Betriebsbremskreis von einem zweiten Druckluftvorrat C2 mit Druckluft unter Vorratsdruck versorgt, wobei der erste Druckluftvorrat C1 unabhängig von dem zweiten Druckluftvorrat C2 ist.

Das primäre elektrische Bremsanforderungssignal BAS wird dann durch eine Signalleitung 5 in einen elektrischen Eingang einer ersten elektronischen Steuerung ECU-1 (EBS-ECU) eingesteuert, welches hier beispielsweise durch ein zentrales EBS-Steuergerät des EBS gebildet wird.

In der ersten elektronischen Steuerung ECU-1 sind Routinen implementiert, welche für den ersten Betriebsbremskreis (Vorderachsbremskreis) ein erstes primäres elektrisches Steuersignal SS1, für den zweiten Betriebsbremskreis (Hinterachsbremskreis) ein zweites primäres elektrisches Steuersignal SS2 und für den ein Anhängersteuermodul TCM umfassenden Anhängerbremskreis ein primäres elektrisches Anhängersteuersignal SST erzeugen, wobei die primären elektrischen Steuersignale SS1, SS2 und SST jeweils Soll-Werte für den jeweiligen Bremsdruck im Vorderachsbremskreis, im Hinterachsbremskreis und in dem Anhängerbremskreis repräsentieren. Die Sollwerte können dabei unterschiedlich sein, beispielsweise abhängig von einer Achslastverteilung, die am Nutzfahrzeug bestimmt wird. Die primären elektrischen Steuersignale SS1, SS2 und SST werden über elektrische Signalleitungen, hier bevorzugt über einen Bremsen-CAN übertragen.

In **Fig.1** sind elektrische Signalleitungen bzw. der Bremsen-CAN durch gestrichelte Linien gekennzeichnet während pneumatische Leitungen in durchgezogenen Linien gezeichnet sind. Die primären elektrischen Steuersignale SS1, SS2 und SST werden dann von der ersten elektronischen Steuerung ECU-1 (EBS-ECU) in den Bremsen-CAN eingesteuert, an welchen ein an der Vorderachse angeordnetes 1-Kanal-Druckregelmodul 1C-EPM mit einem ersten elektrischen Steuereingang 8, ein an der Hinterachse angeordnetes 2-Kanal-Druckregelmodul 2C-EPM mit einem zweiten elektrischen Steuereingang 9 sowie das Anhängersteuermodul TCM mit einem dritten elektrischen Steuereingang 10 angeschlossen sind.

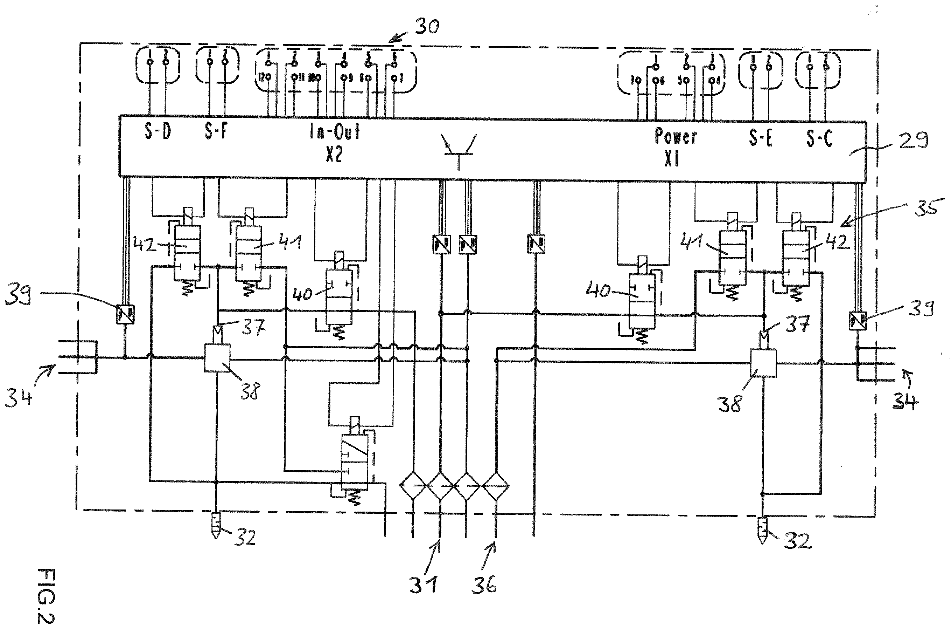

Das 2-Kanal-Druckregelmodul 2C-EPM ist wie ein 2-Kanal-Druckregelmodul gemäß Fig. 2 aufgebaut, welches zwei getrennt voneinander regelbare Kanäle für den Bremsdruck der rechten und linken Seite aufweist, während das 1-Kanal-Druckregelmodul 1C-EPM und das Anhängersteuermodul TCM wie ein 1-Kanal-Druckregelmodul aufgebaut sind. Bezogen auf **Fig. 2** umfasst ein solches 1-Kanal-Druckregelmodul lediglich einen Kanal des dort gezeigten 2-Kanal-Druckregelmoduls.

Das Anhängersteuermodul TCM verfügt daher auch über ein eigenes elektronisches Steuergerät. Abhängig von dem an seinem dritten elektrischen Steuereingang 10 anstehenden elektrischen Anhängersteuersignal SST steuert es seine integrierten Magnetventile an, um einen pneumatischen Steuerdruck für das ebenfalls integrierte Relaisventil zu erzeugen, das dann einen entsprechenden Anhängerbremsdruck an einen dritten pneumatischen Arbeitsausgang aussteuert, welcher mit einem hier nicht dargestellten Kupplungskopf "Bremse" verbunden ist.

Das 1-Kanal-Druckregelmodul 1C-EPM der Vorderachse ist dann mit einem ersten Druckregelmodul-Vorratsanschluss 11 versorgungseitig an den ersten (Vorderachs-) Druckluftvorrat C1 angeschlossen, der unter einem ersten Vorratsdruck steht. Das an der Hinterachse angeordnete 2-Kanal-Druckregelmodul ist über einen zweiten Druckregelmodul-Vorratsanschluss 12 versorgungsseitig an den zweiten (Hinterachs-) Druckluftvorrat C2 angeschlossen, der unter einem zweiten Vorratsdruck steht. Das Anhängersteuermodul TCM ist versorgungsseitig über einen dritten Druckregelmodul-Versorgungsanschluss 13 beispielsweise an den ersten Druckluftvorrat C1 angeschlossen.

Dann setzen die in den beiden Druckregelmodulen 1C-EPM und 2C-EPM sowie in dem Anhängersteuermodul TCM integrierten elektronischen Steuergeräte 29 (siehe **Fig. 2****)** die in den empfangenen primären elektrischen Steuersignalen SS1, SS2 und SST enthaltenen Informationen über den jeweiligen Soll-Wert für den Betriebsbremsdruck bzw. Anhängerbremsdruck um, indem sie für jeden Kanal unabhängig die jeweils integrierten Magnetventile ansteuern, um pneumatische Steuerdrücke für die ebenfalls integrierten Relaisventile 38 (siehe **Fig. 2****)** zu erzeugen, die dann bei dem 1-Kanal-Druckregelmodul 1C-EPM der Vorderachse an einem ersten pneumatischen Arbeitsausgang 14 einen Ist-Wert für den ersten Betriebsbremsdruck an der Vorderachse aussteuern. Der erste pneumatischen Arbeitsausgang 14 des 1-Kanal-Druckregelmoduls 1C-EPM ist mit zwei ABS-Drucksteuerventilen, einem ersten Drucksteuerventil PCV1 und einem zweiten Drucksteuerventil PCV2 verbunden, welche - ebenfalls von der ersten elektronischen Steuerung ECU-1 (EBS-ECU) gesteuert - den ausgesteuerten zunächst gemeinsamen Bremsdruck an der Vorderachse je Rad oder Achsseite individuell halten, senken oder steigern können, beispielsweise für eine Bremsschlupfregelung (ABS-Funktion), bevor er in pneumatische Betriebsbremszylinder, einen ersten pneumatischen Betriebsbremszylinder BZ1 an einem ersten Vorderrad und einen zweiten pneumatischen Betriebsbremszylinder BZ2 an einem zweiten Vorderrad der Vorderachse eingesteuert wird.

In gleicher Weise wird von dem 2-Kanal-Druckregelmodul 2C-EPM an der Hinterachse je Kanal unabhängig jeweils ein Ist-Wert eines zweiten Bremsdrucks an die beiden zweiten pneumatischen Arbeitsausgänge 15a, 15b gesteuert. Die beiden zweiten pneumatischen Arbeitsausgänge 15a, 15b sind hier beispielsweise ebenfalls über je ein ABS-Drucksteuerventil, ein drittes ABS-Drucksteuerventil PCV3 und ein viertes ABS-Drucksteuerventil PCV4 an jeweils einen zugeordneten dritten und vierten pneumatischen Betriebsbremszylinder BZ3, BZ4 einer rechten und linken Hinterrads der Hinterachse angeschlossen. Der beispielsweise je Kanal vorhandene Drucksensor 39 (siehe **Fig. 2****)** des 2-Kanal-Druckregelmoduls 2C-EPM meldet dann den jeweiligen Ist-Wert des Bremsdrucks an das integrierte elektronische Steuergerät 29 des 2-Kanal-Druckregelmoduls 2C-EPM, welches dann durch elektrische Ansteuerung der integrierten Magnetventile 40, 41, 42 (siehe **Fig. 2****)** den Ist-Wert auf den Soll-Wert des Bremsdrucks regelt. Das integrierte elektronische Steuergerät 29 umfasst beispielsweise auch ABS-Routinen, um die Bremsdrücke seitenweise oder je Rad hinsichtlich abhängig von dem jeweiligen Bremsschlupf zu regeln.

Auf die gleiche Weise wird in dem Anhängersteuermodul TCM abhängig von dem elektrischen Anhängersteuersignal SST ein Ist-Anhängerbremsdruck an den dritten pneumatischen Arbeitsausgang 21 und von dort in den Kupplungskopf "Bremse" ausgesteuert, durch den integrierten Drucksensor 39 (siehe **Fig. 2****)** gemessen und dann auf den Soll-Anhängerbremsdruck durch das integrierte elektronische Steuergerät 29 geregelt.

Die erste elektronische Steuerung ECU-1 (EBS-ECU), der elektrische Kanal 3 des Fußbremsmoduls FBM, das Anhängersteuermodul TCM und die Druckregelmodule 1C-EPM und 2C-EPM werden hier beispielsweise von einer ersten elektrischen Energieversorgung I, beispielsweise einer an das Bordnetz angeschlossenen Batterie mit elektrischer Energie versorgt.

Die vorrangige elektro-pneumatische Steuerung der beiden Betriebsbremskreise und des Anhängerbremskreises umfasst die elektrischen und elektronischen Komponenten der beiden Betriebsbremskreise und des Anhängerbremskreises wie beispielsweise den elektrischen Kanal 3 des Fußbremsmoduls FBM, die erste elektrische Energieversorgung I, die erste elektronische Steuerung ECU-1 (EBS-ECU) und die in den Druckregelmoduln 1C-EPM, 2C-EPM und in dem Anhängersteuermodul TCM integrierten elektronischen Steuergeräte 29, Magnetventile 40, 41, 42 und Drucksensoren 39 **(****Fig. 2****).**

Für eine demgegenüber nachrangige pneumatische Steuerung der beiden Betriebsbremskreise und des Anhängerbremskreises, welche dann automatisch aktiviert wird, wenn die vorrangige elektro-pneumatische Steuerung ausfällt, steuern die beiden pneumatischen Kanäle 6, 7 des Fußbremsmoduls FBM je einen primären pneumatischen Steuerdruck SD1 und SD2 in jeweils eine pneumatische Verbindung 16a, 16b aus. Dabei ist eine erste pneumatische Verbindung 16a zwischen einem ersten pneumatischen Ausgang 17a des ersten Kanals 6 und einem ersten pneumatischen Druckregelmodul-Steuereingang 18 des 1-Kanal-Druckregelmoduls 1C-EPM sowie einem dritten pneumatischen Druckregelmodul-Steuereingang 20 des Anhängersteuermoduls TCM und eine zweite pneumatische Verbindung 16b zwischen einem zweiten pneumatischen Ausgang 17b des zweiten Kanals 7 und den zweiten pneumatischen Druckregelmodul-Steuereingängen 19a, 19b des 2-Kanal-Druckregelmoduls 2C-EPM gezogen. Der dritte pneumatische Druckregelmodul-Steuereingang 20 des Anhängersteuermoduls TCM ist bevorzugt über ein fünftes Drucksteuerventil PCV5 an die zweite pneumatische Verbindung 16b angeschlossen.

Das 1-Kanal-Druckregelmodul 1C-EPM, das 2-Kanal-Druckregelmodul 2C-EPM und das Anhängersteuermodul TCM können dann durch in den pneumatischen Verbindungen 16a, 16b geführten pneumatischen Steuerdrücke rein pneumatisch gesteuert werden.

Weiterhin sind an den Vorderrädern jeweils ein Raddrehzahlsensor RS1 und RS2 sowie an den Hinterrädern jeweils ein Raddrehzahlsensor RS3 und RS4 angeordnet, um die Raddrehzahlen dieser Räder zu erfassen und hier als Raddrehzahlsignale beispielsweise in die erste elektronische Steuerung ECU-1 (EBS-ECU) einzusteuern, in welcher beispielsweise eine Bremsschlupfregelung (ABS), eine Antriebsschlupfregelung (ASR) und ein Stabilitätsprogramm (ESP) implementiert sind, wobei diese Regelsysteme die Raddrehzahlsignale verarbeiten. Weiterhin steuern zu diesem Zweck auch weitere hier nicht explizit gezeigte Sensoren wie ein Lenkwinkelsensor, ein Drehratensensor sowie ein Beschleunigungssensor ihre Signale in die erste elektronische Steuerung ECU-1 (EBS-ECU) beispielsweise über den Bremsen-CAN ein.

Dabei sind wenigstens die Raddrehzahlsensoren RS1-RS4, der wenigstens eine Lenkwinkelsensor, der wenigstens eine Drehratensensor sowie der wenigstens eine Beschleunigungssensor Bestandteile einer Sensoreinrichtung S, deren Signale auch für eine zweite elektronische Steuerung ECU-2 verfügbar sind und dort verarbeitet werden können.

Der erste und zweite Druckluftvorrat C1, C2 werden durch ein hier nicht gezeigtes Mehrkreisschutzventil mit einer von einem Kompressor geförderten Druckluft befüllt und sind kreisweise getrennt und daher unabhängig voneinander.

Wenn die vorrangige elektro-pneumatische Steuerung der beiden Betriebsbremskreise und des Anhängerbremskreises des EBS ausfällt, beispielsweise dadurch, dass eine elektrische/elektronische Komponente oder mehrere elektrische/elektronische Komponenten ausfällt (ausfallen) ausfallen, wie die erste elektrische Energieversorgung I, der elektrische Kanal 3 des Fußbremsmoduls FBM, die erste elektronische Steuerung ECU-1 (EBS-ECU) und/oder die in den Druckregelmoduln 1C-EPM, 2C-EPM oder in dem Anhängersteuermodul TCM integrierten elektronischen Steuergeräte und/oder Magnetventile, so greift die nachrangige pneumatische Steuerung als pneumatische Redundanz.

Mit anderen Worten schalten in den Druckregelmoduln 1C-DRM, 2C-DRM und im Anhängersteuermodul TCM integrierte, dann stromlos gesetzte Backup-Magnetventile 40 **(siehe** **Fig. 2****)** von der bestromten Sperrstellung, in welcher die pneumatischen Steuerdrücke von dem pneumatischen Steueranschluss 37 des betreffenden integrierten Relaisventils 38 abgesperrt ist, dann unbestromt federbelastet in ihre Durchgangsstellung um, wobei dann die in den pneumatischen Verbindungen 16a, 16b geführten pneumatischen Steuerdrücke das in den Druckregelmoduln 1C-DRM, 2C-DRM und im Anhängersteuermodul TCM jeweils integrierte Relaisventil 38 steuern, damit dieses dann aus dem jeweils angeschlossenen ersten oder zweiten Druckluftvorrat C1, C2 den ersten und zweiten Betriebsbremsdruck sowie den Anhängerbremsdruck moduliert und an die betreffenden pneumatischen Betriebsbremszylinder BZ1-BZ4 und an den Kupplungskopf "Bremse" leitet. Damit ist eine erste, hier pneumatische Redundanz für den Fall vorhanden, dass die vorrangige elektro-pneumatische Steuerung des EBS ausfällt.

Eine zweite Redundanz, welche eine elektro-pneumatische Redundanz darstellt, ergibt sich daraus, dass in die pneumatischen Verbindungen 16a, 16b eine elektronisch gesteuerte, elektro-pneumatische Komponente 24 geschaltet ist. Die elektronisch gesteuerte, elektro-pneumatische Komponente 24 umfasst hier beispielsweise ein 2-kreisiges oder 2-Kanal-Druckregelmodul BCA, wie es in **Fig. 2** schematisch dargestellt ist.

Dabei ist die erste pneumatische Verbindung 16a an einen ersten Steuerdruckeingang zum Einsteuern des primären pneumatischen Steuerdrucks SD1 und die zweite pneumatische Verbindung 16b an einen zweiten Steuerdruckeingang 26 zum Einsteuern des primären pneumatischen Steuerdrucks SD2 in das 2-Kanal-Druckregelmodul BCA angeschlossen. Weiterhin weist das 2-Kanal-Druckregelmodul BCA einen ersten Steuerdruckausgang 27 zum Aussteuern eines ersten sekundären pneumatischen Steuerdrucks SD1* und einen zweiten Steuerdruckausgang 28 zum Aussteuern eines zweiten sekundären pneumatischen Steuerdrucks SD2* auf. Der erste sekundäre pneumatische Steuerdruck SD1* wird dann in die erste pneumatische Verbindung 16a und damit in den ersten pneumatischen Druckregelmodul-Steuereingang 18 des 1-Kanal-Druckregelmoduls 1C-EPM eingesteuert, während der zweite sekundäre pneumatische Steuerdruck SD2* in die zweite pneumatische Verbindung 16b und damit in die zweiten pneumatischen Druckregelmodul-Steuereingänge 19a, 19b des 2-Kanal-Druckregelmoduls 2C-EPM eingesteuert wird. Wie die beiden primären pneumatischen Steuerdrücke SD1 und SD2 können auch die beiden sekundären pneumatischen Steuerdrücke SD1* und SD2* unterschiedlich groß sein.

Das 2-Kanal-Druckregelmodul BCA wird über eine elektrische Steuerleitung, bevorzugt durch den Bremsen-CAN von einer zweiten elektronischen Steuerung ECU-2 gesteuert, welche beispielsweise ebenfalls von der elektronisch gesteuerten, elektro-pneumatischen Komponente 24 umfasst ist.

Weiterhin kann die zweite elektronischen Steuerung ECU-2 von einem elektronischen Steuergerät eines Fahrerassistenzsystems und/oder einer Autopiloteinrichtung durch ein sekundäres elektrisches Bremsanforderungssignal BAS* gesteuert werden. Das sekundäre Bremsanforderungssignal BAS* kann insbesondere eine Information über eine Soll-Fahrzeugverzögerung umfassen, welche durch das Fahrerassistenzsystem und/oder die Autopiloteinrichtung vorgegeben und dann in die zweite elektronische Steuerung ECU-2 eingesteuert werden kann.

Aus dieser Konstellation ergeben sich mehrere Fälle einer Bremssteuerung.

In einem ersten Fall kann die zweite elektronischen Steuerung ECU-2 das 2-Kanal-Druckregelmodul BCA ausschließlich abhängig von dem sekundären Bremsanforderungssignal BAS* steuern und dann insbesondere unabhängig von dem ersten primären pneumatischen Steuerdruck SD1 und dem zweiten primären pneumatischen Steuerdruck SD2.

Eine von den ersten und zweiten primären pneumatischen Steuerdrücken SD1 und SD2 unabhängige Erzeugung oder Bildung der ersten und zweiten sekundären pneumatischen Steuerdrücke SD1* und SD2* kann beispielsweise erfolgen, wenn die ersten und zweiten primären pneumatischen Steuerdrücke SD1 und SD2 vom Fußbremsmodul FBM gar nicht gebildet werden, d.h. wenn der Fahrer keine Bremsung über das Fußbremsmodul FBM anfordert. Dies kann der Fall sein, wenn der Fahrer beispielsweise keine Bremsung wünscht oder aber, wenn eigentlich eine Bremsung wegen einer kritischen Situation eigentlich notwendig wäre, aber der Fahrer unaufmerksam ist und dann nicht bremst. Wenn der Fahrer keine Bremsung über das Fußbremsmodul FBM anfordert, so wird auch kein primäres Bremsanforderungssignal BAS erzeugt, so dass dann neben der nachrangigen pneumatischen Steuerung auch die vorrangige elektro-pneumatische Steuerung der beiden Betriebsbremskreise und des Anhängerbremskreises nicht aktiv ist.

Im Weiteren kann dies der Fall sein, wenn der Fahrer zwar über eine Betätigung des Fußbremspedals 4 des Fußbremsmoduls FBM ein primäres Bremsanforderungssignal BAS und damit eine dem Fahrerwunsch entsprechende Soll-Fahrzeugverzögerung vorgibt. Jedoch kann diese vom Fahrer vorgegebene Soll-Fahrzeugverzögerung von einer Soll-Fahrzeugverzögerung abweichen, welche durch das sekundäre Bremsanforderungssignal BAS* der zweiten elektronischen Steuerung ECU-2 vorgegeben wird. Dann kann das zweite sekundäre Bremsanforderungssignals BAS* gegenüber dem primären Bremsanforderungssignal BAS priorisiert werden. Auch sind Fälle denkbar, in denen das primäre Bremsanforderungssignal BAS bei der Erzeugung oder Bildung des sekundären Bremsanforderungssignals BAS* berücksichtigt wird oder in welchen das primäre Bremsanforderungssignal BAS gegenüber dem sekundären Bremsanforderungssignals BAS* priorisiert wird.

In einem zweiten Fall kann die zweite elektronischen Steuerung ECU-2 das 2-Kanal-Druckregelmodul BCA aber auch derart steuern, beispielsweise indem sie kein sekundäres elektrisches Steuersignal SS* erzeugt, dass der erste sekundäre pneumatische Steuerdruck SD1* ausschließlich abhängig von dem ersten primären pneumatischen Steuerdruck SD1 und der zweite sekundäre pneumatische Steuerdruck SD2* ausschließlich abhängig von dem zweiten primären pneumatischen Steuerdruck SD2 erzeugt oder gebildet wird.

In einem dritten Fall kann die zweite elektronischen Steuerung ECU-2 das 2-Kanal-Druckregelmodul BCA derart steuern, dass die ersten und zweiten sekundären pneumatischen Steuerdrücke SD1* und SD2* sowohl abhängig von den ersten und zweiten primären pneumatischen Steuerdrücken SD1 und SD2 als auch abhängig von dem sekundären Bremsanforderungssignal BAS* erzeugt oder gebildet werden.

Zur Kommunikation sind die erste elektronischen Steuerung ECU-1 und die zweite elektronischen Steuerung ECU-2 beispielsweise an den Bremsen-CAN angeschlossen, so dass das auf dem Bremsen-CAN verfügbare sekundäre Bremsanforderungssignals BAS* der ersten elektronischen Steuerung ECU-1 und das auf dem Bremsen-CAN verfügbare primäre Bremsanforderungssignal BAS der zweiten elektronischen Steuerung ECU-2 bekannt sind, insbesondere zu dem Zweck eines Datenaustauschs und insbesondere zur Durchführung der oben beschriebenen Priorisierungen.

Wenn, wie oben beschrieben, der Fahrer zwar durch eine Betätigung des Fußbremspedals 4 des Fußbremsmoduls FBM eine Bremsung mit einer vom Bremswunsch des Fahrers abhängigen Soll-Fahrzeugverzögerung anfordert, kann auch zusätzlich noch von dem Fahrerassistenzsystem eine demgegenüber höhere Soll-Fahrzeugverzögerung oder auch geringere Soll-Fahrzeugverzögerung vorgegeben werden. Dabei kann die von einem Notbremsassistenten erzeugte Notbremsverzögerung insbesondere größer als die vom Fahrer angeforderte Soll-Fahrzeugverzögerung sein. In diesem Fall wird das sekundäre Bremsanforderungssignal BAS* gegenüber dem primären Bremsanforderungssignal BAS priorisiert. Denkbar ist auch, dass eine adaptive Geschwindigkeitsregelung (ACC), welche den Abstand oder die Relativgeschwindigkeit in Bezug zu einem vorausfahrenden Fahrzeug automatisch regelt, das sekundäre Bremsanforderungssignal BAS* erzeugt, ohne dass der Fahrer das Fußbremsmodul FBM betätigen muss oder betätigt. Allgemein steuert die zweite elektronische Steuerung ECU-2 das 2-Kanal-Druckregelmodul BCA an, um die sekundären pneumatischen Streuerdrücke SD1* und SD2* abhängig von dem sekundären Bremsanforderungssignal BAS* zu erzeugen, welches hier beispielsweise von einer Autopiloteinrichtung und/oder von einem Fahrerassistenzsystem erzeugt wird.

Da die Signale der Raddrehzahlsensoren RS1-RS4, des wenigstens einen Lenkwinkelsensors, des wenigstens einen Drehratensensors sowie des wenigstens einen Beschleunigungssensors als Bestandteile der Sensoreinrichtung S auch in die zweite elektronische Steuerung ECU-2 eingesteuert werden, sind beispielsweise dort ebenfalls eine Bremsschlupfregelung (ABS), eine Antriebsschlupfregelung (ASR) und ein Stabilitätsprogramm (ESP) wenigstens teilweise implementiert, um diese Regelfunktionen auszuführen. Alternativ oder zusätzlich können diese Regelfunktionen auch in einem elektronischen Steuergerät 29 des 2-Kanal-Druckregelmoduls BCA implementiert sein. Weiterhin sind auch die Drucksteuerventile PCV1-PCV5 von der zweiten elektronischen Steuerung ECU-2 gesteuert, so dass die zweite elektronische Steuerung ECU-2 den Bremsdruck seitenweise, achsweise und hier insbesondere auch radweise steuern oder regeln kann, was beispielsweise im Rahmen Bremsschlupfregelung, Antriebsschlupfregelung oder Stabilitätsregelung notwendig sein kann. Auch kann durch Steuerung des fünften ABS-Drucksteuerventils PCV5 der Anhängerbremsdruck individuell eingestellt werden.

Mit Hilfe der elektronisch gesteuerten, elektropneumatischen Komponente 24 können daher, insbesondere unabhängig von der ersten elektronischen Steuerung ECU-1, die oben genannten Regelfunktionen vollständig durchgeführt werden.

Die zweite elektronische Steuerung ECU-2 wie auch das 2-Kanal-Druckregelmodul BCA werden bevorzugt von einer zweiten elektrischen Energieversorgung II mit elektrischer Energie versorgt, welche unabhängig von der ersten elektrischen Energieversorgung I ist.

Das in Fig. 2 schematisch dargestellte 2-Kanal-Druckregelmodul BCA umfasst zwei getrennte Kanäle zur Bildung des ersten sekundären pneumatischen Steuerdrucks SD1* und zur Bildung des zweiten sekundären pneumatischen Steuerdrucks SD2*: Da die beiden Kanäle im Wesentlichen identisch aufgebaut sind, soll im Folgenden stellvertretend für den ersten Kanal der Aufbau des zweiten Kanals erläutert werden, in welchem der zweite sekundäre pneumatische Steuerdruck SD2* für die Hinterachse gebildet und insbesondere geregelt wird. Dabei kann der erste Kanal einen Druckregelmodul-Vorratsanschluss umfassen, welcher hier beispielsweise mit dem ersten Druckluftvorrat C1 verbunden ist. Auch kann der der zweite Kanal einen Druckregelmodul-Vorratsanschluss umfassen, welcher hier beispielsweise mit dem zweiten Druckluftvorrat C2 verbunden ist. Auch können die Druckregelmodul-Vorratsanschlüsse beider Kanäle an einen der beiden Druckluftvorräte C1 oder C2 angeschlossen sein. Die elektrische Energieversorgung des 2-Kanal-Druckregelmoduls BCA erfolgt hier beispielsweise durch die zweite elektrische Energieversorgung.

Der zweite Kanal umfasst weiterhin einen elektrischen Druckregelmodul-Steuereingang 30, einen pneumatischen Druckregelmodul-Steuereingang 31, einen mit einer Drucksenke verbundenen Druckregelmodul-Entlüftungsausgang 32 und einen Druckregelmodul-Arbeitsausgang 34, ein mit dem elektrischen Druckregelmodul-Steuereingang 30 elektrisch verbundenes elektronisches Druckregelmodul-Steuergerät 29, eine von dem elektronischen Druckregelmodul-Steuergerät 29 gesteuerte elektro-magnetische Einlass-/Auslass-Ventilkombination 35, welche mit einem Druckregelmodul-Vorratsanschluss 36 zur Versorgung mit Vorratsdruck verbunden ist, ein von der elektro-magnetischen Einlass-/Auslass-Ventilkombination 35 durch einen pneumatischen Relaissteuerdruck an seinem pneumatischen Steueranschluss 37 gesteuertes Relaisventil 38, welches abhängig von dem Relaissteuerdruck aus dem Vorratsdruck an dem Druckregelmodul-Arbeitsausgang 34 einen Arbeitsdruck moduliert, einen Drucksensor 39, welcher den Arbeitsdruck am Druckregelmodul-Arbeitsausgang 34 erfasst und einen entsprechenden Ist-Druckwert in das elektronische Druckregelmodul-Steuergerät 29 einsteuert, ein elektromagnetisches Backup-Ventil 40, welches einerseits an den pneumatischen Druckregelmodul-Steuereingang 31 und andererseits an den pneumatischen Steueranschluss 37 des Relaisventils 38 angeschlossen ist und welches bestromt in einer Sperrstellung den pneumatischen Druckregelmodul-Steuereingang 31 gegenüber dem pneumatischen Steueranschluss 37 des Relaisventils 38 absperrt und unbestromt in einer Durchlassstellung den pneumatischen Druckregelmodul-Steuereingang 31 mit dem pneumatischen Steueranschluss 37 des Relaisventils 38 verbindet.

Da in dem Relaisventil 38 ein Steuerkolben von dem pneumatischen Steuerdruck an seinem pneumatischen Steueranschluss 37 pneumatisch betätigt wird, der wiederum ein Doppelsitzventil betätigt, das stellungsabhängig den Druckregelmodul-Vorratsanschluss 36 mit dem Druckregelmodul-Arbeitsausgang 34 verbindet, herrscht eine pneumatische Trennung zwischen dem pneumatischen Steueranschluss 37 des Relaisventils 38 und dem Druckregelmodul-Arbeitsausgang 34. Vielmehr moduliert das Relaisventil 38 aus dem an dem Druckregelmodul-Vorratsanschluss 36 anstehenden Vorratsdruck den Arbeitsdruck am Druckregelmodul-Arbeitsausgang 34 in Abhängigkeit von dem an dem pneumatischen Steueranschluss 37 anstehenden Steuerdruck, der in den Druckregelmodul-Steuereingang 31 eingesteuert wird.

Das elektronische Steuergerät 29 ist ausgebildet, dass es die elektro-magnetische Einlass-/Auslass-Ventilkombination 35 derart ansteuert, dass der Ist-Druckwert auf einen Soll-Druckwert eingeregelt wird, welches durch ein in den elektrischen Druckregelmodul-Steuereingang 30 einsteuerbares elektrisches Signal repräsentiert wird.

Die elektro-magnetische Einlass-/Auslass-Ventilkombination 35 kann, ein Einlassventil 41 und ein Auslassventil 42 umfassen, welche insbesondere jeweils als 2/2-Wege-Magnetventil ausgebildet sind. Aber auch eine Ausführung mit einem 2/2-Wege-Magnetventil und einem 3/2-Wege-Magnetventil ist möglich.

Einen identischen oder ähnlichen Aufbau wie in **Fig. 2** weist auch das 2-Kanal-Druckregelmodul 2C-EPM an der Hinterachse auf. Das 1-Kanal-Druckregelmodul an der Vorderachse ist analog zu einem Kanal des in **Fig. 2** schematisch dargestellten 2-Kanal-Druckregelmoduls BCA aufgebaut.

Bei dem 1-Kanal Druckregelmodul 1C-EPM und bei dem 2-Kanal-Druckregelmodul 2C-EPM bilden jeweils die ersten, die zweiten und den dritten pneumatischen Steuerdruckeingänge 18, 19a, 19b, 20 den pneumatischen Druckregelmodul-Steuereingang 31 **(****Fig. 2****)** zum Einsteuern des sekundären pneumatischen Steuerdrucks SD1* bzw. SD2* und die pneumatischen Arbeitsausgänge 14, 15a, 15b, 21 den Druckregelmodul-Arbeitsausgang 34 **(****Fig. 2****)** zum Aussteuern des Bremsdrucks für die Bremszylinder BZ1, BZ2, BZ3, BZ4 und des Anhängerbremsdrucks für den Kupplungskopf "Bremse". Weiterhin ist der erste Druckregelmodul-Vorratsanschluss 11 des 1-Kanal Druckregelmoduls 1C-EPM an den ersten Druckluftvorrat C1 und der zweite Druckregelmodul-Vorratsanschluss 12 des 2-Kanal Druckregelmoduls 2C-EPM an den zweiten Druckluftvorrat C2 und der dritte Druckregelmodul-Vorratsanschluss 13 an den ersten Druckluftvorrat C1 jeweils als Druckregelmodul-Vorratsanschlüsse 36 **(****Fig. 2****)** angeschlossen. Weiterhin sind die ersten, zweiten und dritten elektrischen Druckregelmodul-Steuereingänge 8, 9, 10 als elektrische Druckregelmodul- Steuereingänge 30 **(****Fig. 2****)** an die erste elektronische Steuerung ECU-1 angeschlossen, zum Einsteuern der primären elektrischen Steuersignale SS1, SS2 und SST.

Bei dem 2-Kanal-Druckregelmodul BCA werden in die ersten und zweiten Steuerdruckeingänge 25, 26 als pneumatische Druckregelmodul-Steuereingänge 30 **(****Fig. 2****)** die primären pneumatischen Steuerdrücke SD1 und SD2 über die pneumatische Verbindungen 16a, 16b eingesteuert, und über die ersten und zweiten Steuerdruckausgänge 27, 28 als Druckregelmodul-Arbeitsausgänge 34 **(****Fig. 2****)** die ersten und zweiten sekundären pneumatischen Steuerdrücke SD1* und SD2* in die pneumatischen Verbindungen 16a, 16b ausgesteuert. Weiterhin ist der zweite elektrische Steuereingang 9 als elektrischer Druckregelmodul-Steuereingang 30 **(****Fig. 2****)** an die zweite elektronische Steuerung ECU-2 angeschlossen, welche das sekundäre elektrische Steuersignal SS* in den zweiten elektrischen Steuereingang 9 einsteuert.

Das 2-Kanal-Druckregelmodul BCA ist dann bevorzugt ausgebildet ist, dass wenn von der zweiten elektronischen Steuerung ECU-2 kein sekundäres elektrisches Steuersignal SS* erzeugt wird und dann das 2-Kanal-Druckregelmodul BCA unbestromt ist, das integrierte elektromagnetische Backup-Ventil 40 in die unbestromte Durchlassstellung schaltet, wobei dann der jeweilige primäre pneumatische Steuerdruck SD1 bzw. SD2 an dem pneumatischen Steueranschluss 37 des integrierten Relaisventils 38 ansteht, welches dann den sekundären pneumatischen Steuerdruck SD1* bzw. SD2* abhängig von dem jeweiligen primären pneumatischen Steuerdruck SD1 bzw. SD2 an dem ersten und zweiten Steuerdruckausgängen 27, 28 **(****Fig. 2****:** Druckregelmodul-Arbeitsausgang 34) erzeugt oder bildet. Dies bildet den Fall ab, in denen die primären pneumatischen Steuerdrücke SD1 und SD2 durch eine Betätigung des Fußbremspedals 4 des Fußbremsmoduls FBM abhängig von einer nach Fahrerwunsch vorgegebenen Soll-Fahrzeugverzögerung in den beiden pneumatischen Kanälen 6, 7 des Fußbremsmoduls FBM erzeugt werden. Dadurch wird im Rahmen des nachrangigen pneumatischen Steuerkreises, wenn der vorrangige elektro-pneumatische Steuerkreis ausgefallen ist, das 1-Kanal-Druckregelmodul 1C-EPM und das 2-Kanal-Druckregelmodul 2C-EPM die Betriebsbremskreise und der Anhängerbremskreis rein pneumatisch gesteuert. Dann steuern die sekundären pneumatischen Steuerdrücke SD1* bzw. SD2* die dort integrierten Relaisventile 38 pneumatisch, welche dann abhängig von den sekundären pneumatischen Steuerdrücken SD1* bzw. SD2* aus dem jeweiligen Vorratsdruck des Druckluftvorrats C1, C2 den Bremsdruck für die Bremszylinder BZ1-BZ4 und den Anhängerbremsdruck erzeugen. In dem 1-Kanal-Druckregelmodul 1C-EPM, in dem 2-Kanal-Druckregelmodul 2C-EPM und in dem Anhängersteuermodul TCM ist dann das jeweils integrierte Backup-Magnetventil 40 unbestromt, weil der vorrangige elektropneumatische Steuerkreis ausgefallen ist. Die Backup-Magnetventile 40 schalten daher federbelastet in ihre Durchlassstellung, wobei die sekundären pneumatischen Steuerdrücke SD1* bzw. SD2* zu den pneumatischen Steueranschlüssen 37 der integrierten Relaisventile 38 gelangen können, wie anhand von **Fig. 2** leicht vorstellbar ist.

Sind jedoch die vorrangigen elektro-pneumatischen Steuerkreise (Betriebsbremskreise und Anhängersteuerkreis) intakt, so werden die in dem 1-Kanal-Druckregelmodul 1C-EPM, dem 2-Kanal-Druckregelmodul 2C-EPM und in dem Anhängersteuermodul TCM integrierten Backup-Magnetventile 40 bestromt und schalten dann in ihre Sperrstellung, so dass die sekundären pneumatischen Steuerdrücke SD1* bzw. SD2* nicht bis an die pneumatischen Steueranschlüsse 37 der integrierten Relaisventile 38 gelangen können. Die Steuerung der integrierten Relaisventile 38 erfolgt dann durch einen Steuerdruck, welcher über die durch das jeweils integrierte elektronische Steuergerät 29 gesteuerte Einlass-/Auslassventilkombination 35 erzeugt wird.

Wenn von der zweiten elektronischen Steuerung ECU-2 ein sekundäres elektrisches Steuersignal SS* erzeugt wird, dann wird das sekundäre elektrische Steuersignal SS* in das in dem 2-Kanal-Druckregelmodul BCA integrierte elektronische Steuergerät 29 eingesteuert und das elektromagnetische Backup-Ventil 40 in die Sperrstellung geschaltet, wodurch der pneumatische Steueranschluss 37 des Relaisventils 38 gegenüber dem pneumatischen Druckregelmodul-Steuereingang 30 abgesperrt wird, so dass keine pneumatische Steuerung des Relaisventils 38 durch die primären pneumatischen Steuerdrücke SD1 und SD2 möglich ist. Indes steuert dann das integrierte elektronische Steuergerät 29 abhängig von dem sekundären elektrischen Steuersignal SS* die elektro-magnetischen Einlass-/Auslass-Ventilkombination 35 an, um einen pneumatischen Steuerdruck am Steueranschluss 37 des Relaisventils 38 zu erzeugen, welches daraufhin an dem Druckregelmodul-Arbeitsausgang 34 den sekundären pneumatischen Steuerdruck SD1* bzw. SD2* erzeugt oder bildet.

Falls der vorrangige elektro-pneumatische Steuerkreis des EBS ausgefallen ist, können daher die sekundären pneumatischen Steuerdrücke SD1* bzw. SD2* elektrisch/elektronisch durch das sekundäre elektrische Steuersignal SS* der zweiten elektronischen Steuerung ECU-2 erzeugt werden, was eine Vielzahl von Steuerungs- und Regelungsmöglichkeiten der sekundären pneumatischen Steuerdrücke SD1* bzw. SD2* auch unabhängig von einer Bildung oder Größe der primären pneumatischen Steuerdrücke SD1 bzw. SD2 erlaubt. Insbesondere können dann unabhängig von den primären pneumatischen Steuerdrücken SD1 bzw. SD2 die sekundären pneumatischen Steuerdrücke SD1* bzw. SD2* gemäß den oben beschriebenen Regelfunktionen wie beispielsweise Bremsschlupfregelung ABS, Antriebsschlupfregelung ASR und/oder Stabilitätsregelung ESP auf elektrischem/elektronischem Wege gebildet oder moduliert werden, da das 2-Kanal-Druckregelmdoul BCA von der zweiten elektronischen Steuerung ECU-2 mit dem sekundären elektrischen Steuersignal SS* gesteuert wird, welches durch eine solche Regelfunktion beeinflusst werden kann.

Die genannten Regelfunktion(en) kann (können) dabei ausschließlich in der zweiten elektronischen Steuerung ECU-2 implementiert sein. Alternativ kann (können) die Regelfunktion(en) auch sowohl in der zweiten elektronischen Steuerung ECU-2 und in dem integrierten elektronischen Steuergerät 29 des 2-Kanal-Druckregelmoduls BCA oder ausschließlich in dem integrierten elektronischen Steuergerät 29 des 2-Kanal-Druckregelmoduls BCA implementiert sein.

Die elektronisch gesteuerte, elektro-pneumatische Komponente 24 bildet daher eine elektro-pneumatisch gesteuerte Redundanz aus, wenn die elektro-pneumatischen Steuerkreise ausgefallen sind und dann eine elektrische Ansteuerung des 1-Kanal-Druckregelmoduls 1C-EPM, des 2-Kanal-Druckregelmoduls 2C-EPM und des Anhängersteuermoduls durch die primären elektrischen Steuersignale SS1, SS2 verhindert ist, oder auch, wenn vom Fahrer nicht beabsichtigt ist, die primären elektrischen Steuersignale SS1, SS2 zu erzeugen, indem er das Fußbremsmodul nicht betätigt, etwa in einer Situation, in welcher der Fahrer bremsen sollte nicht bremst, weil er beispielsweise unaufmerksam ist.

Der der Ausführungsform von **Fig. 1** sind die zweite elektronische Steuerung ECU-2 und das elektronische Druckregelmodul-Steuergerät 29 getrennt, wobei die zweite elektronische Steuerung ECU-2 und das elektronische Steuergerät 29 auch in einer elektronischen Steuerung zusammengefasst sein können.

### Bezugszeichenliste

- 1: Betriebsbremssystem
- 2: pneumatischer Kanal
- 3: elektrischer Kanal
- 4: Fußbremspedal
- 5: Signalleitung
- 6: 1. pneumat. Kanal
- 7: 2. pneumat. Kanal
- 8: 1. elektrischer Steuereingang
- 9: 2. elektrischer Steuereingang
- 10: 3. elektrischer Steuereingang
- 11: 1. Druckregelmodul-Vorratsanschluss
- 12: 2. Druckregelmodul-Vorratsanschluss
- 13: 3. Druckregelmodul-Vorratsanschluss
- 14: 1. pneumatischer Arbeitsausgang
- 15a/b: 2te pneumatische Arbeitsausgänge
- 16a/b: pneumatische Verbindung
- 17a: 1. pneumatischer Ausgang
- 17b: 2. pneumatischer Ausgang
- 18: 1. Druckregelmodul-Steuereingang
- 19a/b: 2te Druckregelmodul-Steuereingänge
- 20: 3. Druckregelmodul-Steuereingang
- 21: 3. pneumatischer Arbeitsausgang
- 24: elektronisch gesteuerte, elektro-pneumatische Komponente
- 25: 1. Steuerdruckeingang
- 26: 2. Steuerdruckeingang
- 27: 1. Steuerdruckausgang
- 28: 2. Steuerdruckausgang
- 29: elektronisches Steuergerät
- 30: elektrischer Druckregelmodul-Steuereingang
- 31: pneumatischer Druckregelmodul-Steuereingang
- 32: Druckregelmodul-Entlüftungsausgang
- 34: Druckregelmodul-Arbeitsausgang
- 35: Einlass-/Auslassventilkombination
- 36: Druckregelmodul-Vorratsanschluss
- 37: Steueranschluss
- 38: Relaisventil
- 39: Drucksensor
- 40: Backup-Magnetventil
- 41: Einlassventil
- 42: Auslassventil
- C1: erster Druckluftvorrat
- C2: zweiter Druckluftvorrat
- C2: dritter Druckluftvorrat
- ECU-1: erste elektronische Steuerung
- ECU-2: zweite elektronische Steuerung
- BCA: 2-kanal-Druckregelmodul
- BAS: primäres elektrisches Bremsanforderungssignal
- BAS*: sekundäres elektrisches Bremsanforderungssignal
- SS1, SS2, SST: 1., 2., 3. primäre elektrische Steuersignale
- SS*: sekundäres elektrisches Steuersignal
- 1C-EPM: erstes Steuerventil (1-Kanal-Druckregelmodul)
- 2C-EPM: zweites Steuerventil (2-Kanal-Druckregelmodul)
- PCV1-PCV5: ABS-Drucksteuerventile
- TCM: Anhängersteuermodul
- FBM: Fußbremsmodul
- EBS: elektronisch geregeltes Betriebsbremssystem
- CAN: Bremsen-CAN
- I: erste elektrische Energieversorgung
- II: zweite elektrische Energieversorgung
- SD1: erster primärer pneumatischer Steuerdruck
- SD2: zweiter primärer pneumatischer Steuerdruck
- SD1*: erster sekundärer pneumatischer Steuerdruck
- SD2*: zweiter sekundärer pneumatischer Steuerdruck
- S: Sensoreinrichtung

## Patentansprüche

1. Elektronisch gesteuertes pneumatisches Betriebsbremssystem (1) eines Fahrzeugs, welches wenigstens Folgendes aufweist:
a) Eine erste elektronische Steuerung (ECU-1),
b) wenigstens einen Bremskreis mit wenigstens einem elektropneumatischen Steuerventil (1C-EPM, 2C-EPM, TCM), wobei das wenigstens eine elektro-pneumatische Steuerventil (1C-EPM, 2C-EPM; TCM) ausgebildet ist, um in dem wenigstens einen Bremskreis einen Bremsdruck für wenigstens einen Betriebsbremsaktuator (BZ1, BZ2, BZ3, BZ4) einzustellen oder einzuregeln, wobei
c) das wenigstens eine elektro-pneumatische Steuerventil (1C-EPM, 2C-EPM, TCM) wenigstens einen elektrischen Steuereingang (8, 9, 10) zum Aufnehmen eines primären elektrischen Steuersignals (SS1, SS2, SST) und wenigstens einen pneumatischen Steuereingang (18, 19a, 19b, 20) zum Aufnehmen eines sekundären pneumatischen Steuerdrucks (SD1*, SD2*) sowie einen pneumatischen Arbeitsausgang (14, 15a, 15b, 21) aufweist, und
d) das wenigstens eine elektropneumatische Steuerventil (1C-EPM, 2C-EPM, TCM) abhängig von dem primären elektrischen Steuersignal (SS1, SS2, SST) oder von dem sekundären pneumatischen Steuerdruck (SD1*, SD2*) über den pneumatischen Arbeitsausgang (14, 15a, 15b, 21) den wenigstens einen Betriebsbremsaktuator (BZ1, BZ2, BZ3, BZ4) mit dem Bremsdruck versorgt, und wobei
e) die erste elektronische Steuerung (ECU-1) ausgebildet ist, um abhängig von einem primären elektrischen Bremsanforderungssignal (BAS) das primäre elektrische Steuersignal (SS1, SS2, SST) zu erzeugen und in den elektrischen Steuereingang (8, 9, 10) des wenigstens einen elektropneumatischen Steuerventils (1C-EPM, 2C-EPM, TCM) einzusteuern,
f) Bremsanforderungssignal-Erzeugungsmittel (FBM) mit wenigstens einem elektrischen Ausgang und wenigstens einem pneumatischen Ausgang (17a, 17b), welches ausgebildet ist, um gemäß einer Fahrzeug-Sollverzögerung an dem wenigstens einen elektrischen Ausgang das primäre elektrische Bremsanforderungssignal (BAS) zu erzeugen und in die erste elektronische Steuerung (ECU-1) einzusteuern, und um an dem wenigstens einen pneumatischen Ausgang (17a, 17b) wenigstens einen primären pneumatischen Steuerdruck (SD1, SD2) zu erzeugen,
g) wenigstens eine pneumatische Verbindung (16a, 16b), welche zwischen dem wenigstens einen pneumatischen Ausgang (17a, 17b) der Bremsanforderungssignal-Erzeugungsmittel (FBM) und dem pneumatischen Steuereingang (18, 19a, 19b, 20) des wenigstens einen elektropneumatischen Steuerventils (1C-EPM, 2C-EPM; TCM) gezogen ist, **dadurch gekennzeichnet, dass**
h) in der pneumatischen Verbindung (16a, 16b) eine elektronisch gesteuerte, elektro-pneumatische Komponente (24) angeordnet ist, welche wenigstens einen Steuerdruckeingang (25, 26) zum Einsteuern des primären pneumatischen Steuerdrucks (SD1, SD2) und wenigstens einen Steuerdruckausgang (27, 28) zum Aussteuern des sekundären pneumatischen Steuerdrucks (SD1*, SD2*) aufweist, welcher in den pneumatischen Steuereingang (18, 19a, 19b, 20) des wenigstens einen elektropneumatischen Steuerventils (1C-EPM, 2C-EPM, TCM) eingesteuert wird, wobei
i) die elektronisch gesteuerte, elektro-pneumatische Komponente (24) derart ausgebildet ist, dass sie den sekundären pneumatischen Steuerdruck (SD1*, SD2*)
i1) ausschließlich abhängig von dem primären pneumatischen Steuerdruck (SD1, SD2), oder
i2) ausschließlich abhängig von einem sekundären elektrischen Steuersignal (SS*), oder
i3) sowohl abhängig von dem primären pneumatischen Steuerdruck (SD1, SD2) als auch abhängig von dem sekundären elektrischen Steuersignal (SS*) erzeugt, moduliert oder bildet.

2. Betriebsbremssystem nach Anspruch 1, **dadurch gekennzeichnet, dass** die elektronisch gesteuerte, elektropneumatische Komponente (24) derart ausgebildet ist, dass sie Signale
a) eines Fahrerassistenzsystems, und/oder
b) einer Autopiloteinrichtung, und/oder
c) einer ersten Sensoreinrichtung (S)
empfangen und das sekundäre elektrische Steuersignal (SS*) abhängig von diesen Signalen erzeugen kann.

3. Betriebsbremssystem nach Anspruch 2, **dadurch gekennzeichnet, dass** die Sensoreinrichtung (S) wenigstens einen der folgenden Sensoren umfasst: Einen Raddrehzahlsensor (RS1, RS2, RS3, RS4), einen Lenkwinkelsensor, einen Gierratensensor, einen Beschleunigungssensor.

4. Betriebsbremssystem nach Anspruch 2 oder 3, **dadurch gekennzeichnet, dass** die elektronisch gesteuerte, elektropneumatische Komponente (24) an einen Datenbus (CAN) angeschlossen ist, auf welchem die Signale verfügbar sind.

5. Betriebsbremssystem nach einem der Ansprüche 2 bis 4, **dadurch gekennzeichnet, dass** in der elektronisch gesteuerten, elektropneumatischen Komponente (24) eine Bremsschlupfregelung (ABS) implementiert ist, von welcher abhängig das sekundäre elektrische Steuersignal (SS*) erzeugt wird.

6. Betriebsbremssystem nach einem der Ansprüche 2 bis 5, **dadurch gekennzeichnet, dass** in der elektronisch gesteuerten, elektropneumatischen Komponente (24) eine Antriebsschlupfregelung (ASR) implementiert ist, von welcher abhängig das sekundäre elektrische Steuersignal (SS*) erzeugt wird.

7. Betriebsbremssystem nach einem der Ansprüche 2 bis 6, **dadurch gekennzeichnet, dass** in der elektronisch gesteuerten, elektropneumatischen Komponente (24) eine Fahrdynamikregelung oder eine Stabilitätsregelung (ESP) implementiert ist, von welcher abhängig das sekundäre elektrische Steuersignal (SS*) erzeugt wird.

8. Betriebsbremssystem nach einem der Ansprüche 2 bis 7, **dadurch gekennzeichnet, dass** zwischen den pneumatischen Arbeitsausgang (14, 15a, 15b, 21) des wenigstens einen elektropneumatischen Steuerventils (1C-EPM, 2C-EPM, TCM) und den wenigstens einen, von dem wenigstens einen Steuerventil (1C-EPM, 2C-EPM; TCM) mit Bremsdruck versorgten Bremsaktuator (BZ1, BZ2, BZ3, BZ4) ein ABS-Drucksteuerventil (PCV1, PCV2, PCV3, PCV4, PCV5) geschaltet ist, welches von der elektronisch gesteuerten, elektropneumatischen Komponente (24) gesteuert ist, um diesen Bremsdruck je Rad oder je Achse zu modulieren.

9. Betriebsbremssystem nach einem der vorhergehenden Ansprüche, **dadurch gekennzeichnet, dass** die Bremsanforderungssignal-Erzeugungsmittel (FBM) ein Fußbremsmodul (FBM) mit wenigstens einem elektrischen Kanal (3) und wenigstens einem pneumatischem Kanal (6, 7) umfassen, wobei in dem wenigstens einen elektrischen Kanal (3) das primäre Bremsanforderungssignal (BAS) und in dem wenigstens einen pneumatischen Kanal (6, 7) der wenigstens eine primäre pneumatische Steuerdruck (SD1, SD2) abhängig von einer Betätigung eines Fußbremspedals (4) des Fußbremsmoduls (FBM) erzeugt werden.

10. Betriebsbremssystem nach einem der vorhergehenden Ansprüche, **dadurch gekennzeichnet, dass** die elektronisch gesteuerte, elektropneumatische Komponente (24) eine durch das sekundäre elektrische Steuersignal (SS*) steuerbare elektromagnetische Steuerventileinrichtung (BCA) umfasst, wobei der sekundäre pneumatische Steuerdruck (SD1*, SD2*) von der elektromagnetischen Steuerventileinrichtung (BCA) abhängig von dem sekundären elektrischen Steuersignal (SS*) erzeugt, gebildet oder moduliert wird.

11. Betriebsbremssystem nach einem der vorhergehenden Ansprüche, **dadurch gekennzeichnet, dass** die elektronisch gesteuerte, elektropneumatische Komponente (24) eine zweite elektronische Steuerung (ECU-2, 29) sowie wenigstens einen Drucksensor (29) umfasst, welcher den primären pneumatischen Steuerdruck (SD1, SD2) erfasst und entsprechende Drucksignale in die zweite elektronische Steuerung (ECU-2, 29) einsteuert, welche abhängig von den Drucksignalen das sekundäre elektrische Steuersignal (SS*) erzeugt.

12. Betriebsbremssystem nach einem der vorhergehenden Ansprüche, **dadurch gekennzeichnet, dass** das sekundäre elektrische Steuersignal (SS*) abhängig von einem sekundären elektrischen Bremsanforderungssignal (BAS*) ist, welches eine Fahrzeug-Sollverzögerung oder einen Druck-Sollwert repräsentiert.

13. Betriebsbremssystem nach Anspruch 12, **dadurch gekennzeichnet, dass** das sekundäre elektrische Bremsanforderungssignal (BAS*) von einer Autopiloteinrichtung und/oder von einem Fahrerassistenzsystem erzeugbar ist.

14. Betriebsbremssystem nach einem der vorhergehenden Ansprüche, **dadurch gekennzeichnet, dass** es wenigstens ein Druckregelmodul umfasst, welches wenigstens Folgendes aufweist:
a) Wenigstens einen Druckregelmodul-Vorratsanschluss (36) zum Verbinden mit einem unter Vorratsdruck stehenden Druckluftvorrat (C1, C2),
b) wenigstens einen elektrischen Druckregelmodul-Steuereingang (30), wenigstens einen pneumatischen Druckregelmodul-Steuereingang (31), wenigstens einen mit einer Drucksenke verbundenen Druckregelmodul-Entlüftungsausgang (32) und wenigstens einen Druckregelmodul-Arbeitsausgang (34),
c) wenigstens ein mit dem elektrischen Druckregelmodul-Steuereingang (30) elektrisch verbundenes elektronisches Steuergerät (29),
d) wenigstens eine von dem elektronischen Steuergerät (29) gesteuerte elektro-magnetische Einlass-/Auslass-Ventilkombination (35), welche einerseits mit dem Druckregelmodul-Vorratsanschluss (36) zur Versorgung mit Vorratsdruck und andererseits mit dem Druckregelmodul-Entlüftungsausgang (32) zur Entlüftung verbunden ist,
e) ein von der elektro-magnetischen Einlass-/Auslass-Ventilkombination (35) durch einen pneumatischen Relaissteuerdruck an seinem pneumatischen Steueranschluss (37) gesteuertes Relaisventil (38), welches abhängig von dem Relaissteuerdruck aus dem Vorratsdruck an dem Druckregelmodul-Arbeitsausgang (34) einen Arbeitsdruck moduliert,
f) wenigstens einen Drucksensor (39), welcher den Arbeitsdruck am Druckregelmodul-Arbeitsausgang (34) erfasst und einen entsprechenden Ist-Druckwert in das elektronische Steuergerät (29) einsteuert,
g) ein elektromagnetisches Backup-Ventil (40), welches einerseits an den pneumatischen Druckregelmodul-Steuereingang (31)und andererseits an den pneumatischen Steueranschluss (37) des Relaisventils (38) angeschlossen ist und welches bestromt in einer Sperrstellung den pneumatischen Druckregelmodul-Steuereingang (31) gegenüber dem pneumatischen Steueranschluss (37) des Relaisventils (38) absperrt und unbestromt in einer Durchlassstellung den pneumatischen Druckregelmodul-Steuereingang (31) mit dem pneumatischen Steueranschluss (37) des Relaisventils (38) verbindet, wobei
h) das elektronische Steuergerät (29) ausgebildet ist, dass es die elektro-magnetische Einlass-/Auslass-Ventilkombination (35) derart ansteuert, dass der Ist-Druckwert auf einen Soll-Druckwert eingeregelt wird, welcher durch ein in den elektrischen Druckregelmodul-Steuereingang (30) einsteuerbares elektrisches Signal repräsentiert wird.

15. Betriebsbremssystem nach einem der Ansprüche 9 bis 13 und nach Anspruch 14, **dadurch gekennzeichnet, dass** das die elektropneumatische Steuerventileinrichtung (BCA) wenigstens ein Druckregelmodul umfasst, bei welchem
a) der pneumatische Druckregelmodul-Steuereingang (31) den Steuerdruckeingang (25, 26) zum Einsteuern des primären pneumatischen Steuerdrucks (SD1, SD2), und
b) der Druckregelmodul-Arbeitsausgang (34) den Steuerdruckausgang (27, 28) zum Aussteuern des sekundären pneumatischen Steuerdrucks (SD1*, SD2*) bildet,
c) der Druckregelmodul-Vorratsanschluss (36) an wenigstens einen Druckluftvorrat (C2) angeschlossen ist,
d) in den elektrischen Druckregelmodul-Steuereingang (30) das sekundäre elektrische Steuersignal (SS*) einsteuerbar ist.

16. Betriebsbremssystem nach Anspruch 15, **dadurch gekennzeichnet, dass** das die elektropneumatische Steuerventileinrichtung (BCA) ausgebildet ist, dass
a) wenn kein sekundäres elektrisches Steuersignal (SS*) erzeugt wird, das elektromagnetische Backup-Ventil (40) in die Durchlassstellung schaltet, wobei dann das Relaisventil (38) den sekundären pneumatischen Steuerdruck (SD1*, SD2*) abhängig von dem primären pneumatischen Steuerdruck (SD1, SD2) an dem Druckregelmodul-Arbeitsausgang (34) erzeugt oder bildet, und andernfalls,
b) wenn ein sekundäres elektrisches Steuersignal (SS*) erzeugt wird, das elektromagnetische Backup-Ventil (40) in die Sperrstellung schaltet und das sekundäre elektrische Steuersignal (SS*) in das elektronische Steuergerät (29) eingesteuert wird, welches dann abhängig von dem sekundären elektrischen Steuersignal (SS*) die elektro-magnetischen Einlass-/Auslass-Ventilkombination (35) ansteuert, um durch das Relaisventil (38) an dem Druckregelmodul-Arbeitsausgang (34) den sekundären pneumatischen Steuerdruck (SD1*, SD2*) zu erzeugen oder zu bilden.

17. Betriebsbremssystem nach Anspruch 14, oder nach Anspruch 14 und einem der Ansprüche 15 oder 16, **dadurch gekennzeichnet, dass** das wenigstens eine elektropneumatische Steuerventil (1C-EPM, 2C-EPM, TCM) ein Druckregelmodul umfasst, bei welchem
a) der pneumatische Druckregelmodul-Steuereingang (31) den wenigstens einen pneumatischen Steuereingang (18, 19a, 19b, 20) zum Einsteuern des sekundären pneumatischen Steuerdrucks (SD1*, SD2*) bildet, und
b) der Druckregelmodul-Arbeitsausgang (34) den wenigstens einen pneumatischen Arbeitsausgang (14, 15a, 15b, 21) zum Aussteuern des Bremsdrucks für den wenigstens einen Betriebsbremsaktuator (BZ1, BZ2, BZ3, BZ4) bildet,
c) der Druckregelmodul-Vorratsanschluss (36) an wenigstens einen Druckluftvorrat (C1, C2) angeschlossen ist,
d) der elektrische Druckregelmodul-Steuereingang (30) an die erste elektronische Steuerung (ECU-1) angeschlossen ist, zum Einsteuern des primären elektrischen Steuersignals (SS1, SS2, SST).

18. Betriebsbremssystem nach einem der vorhergehenden Ansprüche, **dadurch gekennzeichnet, dass** die elektronisch gesteuerte, elektro-pneumatische Komponente (24) eine elektro-pneumatisch gesteuerte Redundanz ausbildet, wenn die elektrische Ansteuerung des wenigstens einen Steuerventils (1C-EPM, 2C-EPM, TCM) durch das primäre elektrische Steuersignal (SS1, SS2, SST) verhindert ist, oder wenn nicht beabsichtigt ist, ein primäres elektrisches Steuersignal (SS1, SS2, SST) zu erzeugen.

19. Betriebsbremssystem nach Anspruch 1 und Anspruch 15, **dadurch gekennzeichnet, dass** es ein elektronisch geregeltes Betriebsbremssystem mit Bremsdruckregelung (EBS) umfasst, welches durch die elektronisch gesteuerte, elektro-pneumatische Komponente (24) ergänzt ist.

20. Betriebsbremssystem nach einem der vorhergehenden Ansprüche, **dadurch gekennzeichnet, dass** die elektronisch gesteuerte, elektro-pneumatische Komponente (24) ausgebildet ist, dass sie Steuersignale für eine Steuerung einer Antriebsmaschine des Fahrzeugs und/oder für eine Steuerung eines Retarders erzeugt.

## Claims

1. Electronically controlled pneumatic brake system (1) of a vehicle, which has at least the following:
a) A first electronic controller (ECU-1),
b) at least one brake circuit with at least one electropneumatic control valve (1C-EPM, 2C-EPM, TCM), wherein the at least one electropneumatic control valve (1C-EPM, 2C-EPM; TCM) is designed to set or regulate a brake pressure for at least one brake actuator (BZ1, BZ2, BZ3, BZ4) in the at least one brake circuit, wherein
c) the at least one electropneumatic control valve (1C-EPM, 2C-EPM, TCM) has at least one electric control input (8, 9, 10) for receiving a primary electric control signal (SS1, SS2, SST) and at least one pneumatic control input (18, 19a, 19b, 20) for receiving a secondary pneumatic control pressure (SD1*, SD2*) as well as a pneumatic operating output (14, 15a, 15b, 21), and
d) the at least one electropneumatic control valve (1C-EPM, 2C-EPM, TCM) supplies the at least one service brake actuator (BZ1, BZ2, BZ3, BZ4) with the brake pressure as a function of the primary electric control signal (SS1, SS2, SST) or the secondary pneumatic control pressure (SD1*, SD2*) via the pneumatic operating output (14, 15a, 15b, 21), and wherein
e) the first electronic controller (ECU-1) is designed to generate the primary electric control signal (SS1, SS2, SST) as a function of a primary electric braking request signal (BAS) and to import it into the electric control input (8, 9, 10) of the at least one electropneumatic control valve (1C-EPM, 2C-EPM, TCM),
f) braking request signal generation means (FBM) with at least one electrical output and at least one pneumatic output (17a, 17b), which is designed to generate the primary electric braking request signal (BAS) at the at least one electrical output, in accordance with a vehicle deceleration setpoint, and to import it into the first electronic controller (ECU-1), and to generate at least one primary pneumatic control pressure (SD1, SD2) at the at least one pneumatic output (17a, 17b),
g) at least one pneumatic connection (16a, 16b), which is drawn between the at least one pneumatic output (17a, 17b) of the braking request signal generation means (FBM) and the pneumatic control input (18, 19a, 19b, 20) of the at least one electropneumatic control valve (1C-EPM, 2C-EPM; TCM), **characterized in that**
h) an electronically controlled electropneumatic component (24) is arranged in the pneumatic connection (16a, 16b), which has at least one control pressure inlet (25, 26) for importing the primary pneumatic control pressure (SD1, SD2) and at least one control pressure outlet (27, 28) for exporting the secondary pneumatic control pressure (SD1*, SD2*), which is imported into the pneumatic control input (18, 19a, 19b, 20) of the at least one electropneumatic control valve (1C-EPM, 2C-EPM, TCM), wherein
i) the electronically controlled electropneumatic component (24) is designed such that it generates, modulates or forms the secondary pneumatic control pressure (SD1*, SD2*)
i1) solely as a function of the primary pneumatic control pressure (SD1, SD2), or
i2) solely as a function of a secondary electric control signal (SS*), or
i3) both as a function of the primary pneumatic control pressure (SD1, SD2) and as a function of the secondary electric control signal (SS*).

2. Brake system according to claim 1, **characterized in that** the electronically controlled electropneumatic component (24) is designed such that it receives signals
a) from a driver assistance system, and/or
b) an autopilot device, and/or
c) a first sensor device (S) and can generate the secondary electric control signal (SS*) as a function of these signals.

3. Brake system according to claim 2, **characterized in that** the sensor device (S) comprises at least one of the following sensors: a wheel speed sensor (RS1, RS2, RS3, RS4), a steering angle sensor, a yaw rate sensor, an acceleration sensor.

4. Brake system according to claim 2 or 3, **characterized in that** the electronically controlled electropneumatic component (24) is connected to a data bus (CAN), on which the signals are available.

5. Brake system according to any one of claims 2 to 4, **characterized in that** an antilock braking system (ABS) is implemented in the electronically controlled electropneumatic component (24), as a function of which the secondary electric control signal (SS*) is generated.

6. Brake system according to any one of claims 2 to 5, **characterized in that** a traction control system (ASR) is implemented in the electronically controlled electropneumatic component (24), as a function of which the secondary electric control signal (SS*) is generated.

7. Brake system according to any one of claims 2 to 6, **characterized in that** a vehicle dynamics control system or a stability control system (ESP) is implemented in the electronically controlled electropneumatic component (24), as a function of which the secondary electric control signal (SS*) is generated.

8. Brake system according to any one of claims 2 to 7, **characterized in that** an ABS pressure control valve (PCV1, PCV2, PCV3, PCV4, PCV5) is connected between the pneumatic operating output (14, 15a, 15b, 21) of the at least one electropneumatic control valve (1C-EPM, 2C-EPM, TCM) and the at least one brake actuator (BZ1, BZ2, BZ3, BZ4) supplied with brake pressure by the at least one control valve (1C-EPM, 2C-EPM; TCM), which is controlled by the electronically controlled electropneumatic component (24) in order to modulate this brake pressure for each wheel or each axle.

9. Brake system according to any one of the preceding claims, **characterized in that** the braking request signal generation means (FBM) comprises a foot brake module (FBM) with at least one electrical channel (3) and at least one pneumatic channel (6, 7), wherein the primary braking request signal (BAS) is generated in the at least one electrical channel (3) and the at least one primary pneumatic control pressure (SD1, SD2) is generated in the at least one pneumatic channel (6,7) as a function of an actuation of the foot brake pedal (4) of the foot brake module (FBM).

10. Brake system according to any one of the preceding claims, **characterized in that** the electronically controlled electropneumatic component (24) comprises an electromagnetic control valve device (BCA) that can be controlled by the secondary electric control signal (SS*), wherein the secondary pneumatic control pressure (SD1*, SD2*) is generated, formed or modulated by the electromagnetic control valve device (BCA) as a function of the secondary electric control signal (SS*).

11. Brake system according to any one of the preceding claims, **characterized in that** the electronically controlled electropneumatic component (24) comprises a second electronic controller (ECU-2, 29) as well as at least one pressure sensor (29), which detects the primary pneumatic control pressure (SD1, SD2) and imports the corresponding pressure signals into the second electronic controller (ECU-2, 29), which generates the secondary electric control signal (SS*) as a function of the pressure signals.

12. Brake system according to any one of the preceding claims, **characterized in that** the secondary electric control signal (SS*) is dependent on a secondary electric braking request signal (BAS*), which represents a vehicle deceleration setpoint or a pressure value setpoint.

13. Brake system according to claim 12, **characterized in that** the secondary electric braking request signal (BAS*) can be generated by an autopilot device and/or by a driver assistance system.

14. Brake system according to any one of the preceding claims, **characterized in that** it comprises at least one pressure control module, which has at least the following:
a) at least one pressure control module-supply connection (36) for connecting to a compressed air supply (C1, C2) pressurized at a supply pressure,
b) at least one electric pressure control module control input (30), at least one pneumatic pressure control module control input (31), at least one control module ventilation outlet (32) connected to a pressure sink and at least one pressure control module operating output (34),
c) at least one electronic control unit (29) electrically connected to the electric pressure control module control input (30),
d) at least one electromagnetic inlet/outlet valve combination (35) controlled by the electronic control unit (29), which is connected, on the one hand, to the pressure control module supply connection (36) for supplying supply pressure and, on the other hand, to the pressure control module ventilation outlet (32) for ventilation,
e) a relay valve (38) controlled by the electromagnetic inlet/outlet valve combination (35) by means of a pneumatic relay control pressure at its pneumatic control port (37), which modulates a working pressure as a function of the relay control pressure from the supply pressure at the pressure control module operating output (34),
f) at least one pressure sensor (39), which detects the working pressure at the pressure control module operating output (34) and imports a corresponding actual pressure value into the electronic control unit (29),
g) an electromagnetic backup valve (40), which is connected, on the one hand, to the pneumatic pressure control module control input (31) and, on the other hand, to the pneumatic control port (37) of the relay valve (38) and which, energized in a locked position, blocks the pneumatic pressure control module control input (31) as regards the pneumatic control port (37) of the relay valve (38) and, de-energized in a pass-through position, connects the pneumatic pressure control module control input (31) to the pneumatic control port (37) of the relay valve (38), wherein
h) the electronic control unit (29) is designed such that it controls the electromagnetic inlet/outlet valve combination (35) such that the actual pressure value is adjusted to a pressure value setpoint, which is represented by an electrical signal that can be imported into the electric pressure control module control input (30).

15. Brake system according to any one of claims 9 to 13 and according to claim 14, **characterized in that** the electropneumatic control valve device (BCA) comprises at least one pressure control module, in which
a) the pneumatic pressure control module control input (31) forms the control pressure inlet (25, 26) for importing the primary pneumatic control pressure (SD1, SD2), and
b) the pressure control module operating output (34) forms the control pressure outlet (27, 28) for exporting the secondary pneumatic control pressure (SD1*, SD2*),
c) the pressure control module supply connection (36) is connected to at least one compressed air supply (C2),
d) the secondary electric control signal (SS*) can be imported into the electric pressure control module control input (30).

16. Brake system according to claim 15, **characterized in that** the electropneumatic control valve device (BCA) is designed such that
a) if no secondary electric control signal (SS*) is generated, the electromagnetic backup valve (40) switches into the pass-through position, wherein the relay valve (38) generates or forms the secondary pneumatic control pressure (SD1*, SD2*) as a function of the primary pneumatic control pressure (SD1, SD2) at the pressure control module operating output (34), and otherwise,
b) if a secondary electric control signal (SS*) is generated, the electromagnetic backup valve (40) switches into the locked position and the secondary electric control signal (SS*) is imported into the electronic control unit (29), which controls the electromagnetic inlet/outlet valve combination (35) as a function of the secondary electric control signal (SS*), in order to generate or form the secondary pneumatic control pressure (SD1*, SD2*) by means of the relay valve (38) at the pressure control module operating output (34).

17. Brake system according to claim 14, or according to claim 14 and one of the claims 15 or 16, **characterized in that** the at least one electropneumatic control valve (1C-EPM, 2C-EPM, TCM) comprises a pressure control module, in which
a) the pneumatic pressure control module control input (31) forms the at least one pneumatic control input (18, 19a, 19b, 20) for importing the secondary pneumatic control pressure (SD1*, SD2*), and
b) the pressure control module operating output (34) forms the at least one pneumatic operating output (14, 15a, 15b, 21) for exporting the brake pressure for the at least one service brake actuator (BZ1, BZ2, BZ3, BZ4),
c) the pressure control module supply connection (36) is connected to at least one compressed air supply (C1, C2),
d) the electric pressure control module control input (30) is connected to the first electronic controller (ECU-1) for importing the primary electric control signal (SS1, SS2, SST).

18. Brake system according to any one of the preceding claims, **characterized in that** the electronically controlled electropneumatic component (24) forms an electropneumatically controlled redundancy, if electric control of the at least one control valve (1C-EPM, 2C-EPM, TCM) is prevented by the primary electric control signal (SS1, SS2, SST), or if there is no intention to generate a primary electric control signal (SS1, SS2, SST).

19. Brake system according to claim 1 and claim 15, **characterized in that** it comprises an electronically controlled brake system with brake pressure control (EBS), which is supplemented by the electronically controlled electropneumatic component (24).

20. Brake system according to any one of the preceding claims, **characterized in that** the electronically controlled electropneumatic component (24) is designed such that it generates control signals for controlling a drive unit of the vehicle and/or for controlling a retarder.

## Revendications

1. Système de frein de service (1) pneumatique à commande électronique d'un véhicule qui présente au moins ce qui suit :
a) une première commande électronique (EBS-ECU),
b) au moins un circuit de freinage avec au moins une soupape de commande électropneumatique (1C-EPM, 2C-EPM, TCM), dans lequel l'au moins une soupape de commande électropneumatique (1C-EPM, 2C-EPM ; TCM) est formée afin de régler ou réguler dans l'au moins un circuit de freinage une pression de freinage pour au moins un actionneur de frein de service (BZ1, BZ2, BZ3, BZ4), dans lequel
c) la au moins une soupape de commande électropneumatique (1C-EPM, 2C-EPM, TCM) présente au moins une entrée de commande électrique (8, 9, 10) pour la réception d'un signal de commande électrique primaire (SS1, SS2, SST) et au moins une entrée de commande pneumatique (18, 19a, 19b, 20) pour la réception d'une pression de commande pneumatique secondaire (SD1*, SD2*) ainsi qu'une sortie de travail pneumatique (14, 15a, 15b, 21) et
d) la au moins une soupape de commande électropneumatique (1C-EPM, 2C-EPM, TCM) alimente en fonction du signal de commande électrique primaire (SS1, SS2, SST) ou de la pression de commande pneumatique secondaire (SD1*, SD2*) par le biais de la sortie de travail pneumatique (14, 15a, 15b, 21) l'au moins un actionneur de frein de service (BZ1, BZ2, BZ3, BZ4) en pression de freinage, et dans lequel
e) la première commande électronique (ECU-1) est formée afin de générer en fonction d'un signal de demande de freinage électrique primaire (BAS) le signal de commande électrique primaire (SS1, SS2, SST) et de l'introduire dans l'entrée de commande électrique (8, 9, 10) de l'au moins une soupape de commande électropneumatique (1C-EPM, 2C-EPM, TCM),
f) un moyen de génération de signal de demande de freinage (FBM) avec au moins une sortie électrique et au moins une sortie pneumatique (17a, 17b), qui est formé afin de générer selon un ralentissement de consigne de véhicule au niveau de l'au moins une sortie électrique le signal de demande de freinage électrique primaire (BAS) et de l'introduire dans la première commande électronique (ECU-1), et afin de générer au niveau de l'au moins une sortie pneumatique (17a, 17b) au moins une pression de commande pneumatique primaire (SD1, SD2),
g) au moins une liaison pneumatique (16a, 16b) qui est étirée entre l'au moins une sortie pneumatique (17a, 17b) des moyens de génération de signal de demande de freinage (FBM) et l'entrée de commande pneumatique (18, 19a, 19b, 20) de l'au moins une soupape de commande électropneumatique (1C-EPM, 2C-EPM ; TCM), **caractérisé en ce, que**
h) un composant (24) électropneumatique à commande électronique est agencé dans la liaison pneumatique (16a, 16b), composant qui présente au moins une entrée de pression de commande (25, 26) pour l'introduction de la pression de commande pneumatique primaire (SD1, SD2) et au moins une sortie de pression de commande (27, 28) pour l'extraction de la pression de commande pneumatique secondaire (SD1*, SD2*) qui est commandée dans l'entrée de commande pneumatique (18, 19a, 19b, 20) de l'au moins une soupape de commande électropneumatique (1C-EPM, 2C-EPM, TCM), dans lequel
i) le composant électropneumatique à commande électronique (24) est formé de telle manière qu'il génère, module ou forme la pression de commande pneumatique secondaire (SD1*, SD2*)
i1) exclusivement en fonction de la pression de commande pneumatique primaire (SD1, SD2) ou
i2) exclusivement en fonction d'un signal de commande électrique secondaire (SS*) ou
i3) non seulement en fonction de la pression de commande pneumatique primaire (SD1, SD2) mais aussi en fonction du signal de commande électrique secondaire (SS*).

2. Système de frein de service selon la revendication 1, **caractérisé en ce que** le composant électropneumatique à commande électronique (24) est formé de telle manière qu'il puisse recevoir des signaux
a) d'un système d'aide à la conduite et/ou
b) d'un dispositif de pilotage automatique et/ou
c) d'un premier dispositif de détection (S) et générer le signal de commande électrique secondaire (SS*) en fonction de ces signaux.

3. Système de frein de service selon la revendication 2, **caractérisé en ce que** le dispositif de détection (S) comprend au moins l'un des capteurs suivants : un capteur de vitesse de rotation de roue (RS1, RS2, RS3, RS4), un capteur d'angle de direction, un capteur de vitesse de lacet, un capteur d'accélération.

4. Système de frein de service selon la revendication 2 ou 3, **caractérisé en ce que** le composant (24) électropneumatique à commande électronique est raccordé à un bus de données (CAN), sur lequel les signaux sont disponibles.

5. Système de frein de service selon l'une quelconque des revendications 2 à 4, **caractérisé en ce qu'**un système antiblocage des roues (ABS) est mis en œuvre dans le composant électropneumatique à commande électronique (24), en fonction duquel le signal de commande électrique secondaire (SS*) est généré.

6. Système de frein de service selon l'une quelconque des revendications 2 à 5, **caractérisé en ce qu'**un système antipatinage à l'accélération (ASR) est mis en œuvre dans le composant électropneumatique à commande électronique, en fonction duquel le signal de commande électrique secondaire (SS*) est généré.

7. Système de frein de service selon l'une quelconque des revendications 2 à 6, **caractérisé en ce qu'**une régulation de dynamique des véhicules ou un système de correction de trajectoire (ESP) est mis en œuvre dans le composant électropneumatique à commande électronique (24), en fonction duquel le signal de commande électrique secondaire (SS*) est généré.

8. Système de frein de service selon l'une quelconque des revendications 2 à 7, **caractérisé en ce qu'**une soupape de commande de pression ABS (PCV1, PCV2, PCV3, PCV4, PCV5) est montée entre la sortie de travail pneumatique (14,15a,15b, 21) de l'au moins une soupape de commande électropneumatique (1C-EPM, 2C-EPM, TCM) et l'au moins un actionneur de frein alimenté en pression de freinage par l'au moins une soupape de commande (1C-EPM, 2C-EPM ; TCM), soupape qui est commandée par le composant électropneumatique à commande électronique (24) afin de moduler cette pression de freinage par roue ou par essieu.

9. Système de frein de service selon l'une quelconque des revendications précédentes, **caractérisé en ce que** les moyens de génération de signal de demande de freinage (FBM) comprennent un module de frein à pédale (FBM) avec au moins un canal électrique (3) et au moins un canal pneumatique (6, 7), dans lequel le signal de demande de freinage primaire (BAS) est généré dans l'au moins un canal électrique (3) et l'au moins une pression de commande pneumatique primaire (SD1, SD2) est générée dans l'au moins un canal pneumatique (6, 7) en fonction d'un actionnement d'une pédale de frein (4) du module de frein à pédale (FBM).

10. Système de frein de service selon l'une quelconque des revendications précédentes, **caractérisé en ce que** le composant (24) électropneumatique à commande électronique comprend un dispositif de soupape de commande (BCA) électromagnétique commandable par le signal de commande électrique secondaire (SS*), dans lequel la pression de commande pneumatique secondaire (SD1*, SD2*) est générée, formée ou modulée par le dispositif de soupape de commande électromagnétique (BCA) en fonction du signal de commande électrique secondaire (SS*).

11. Système de frein de service selon l'une quelconque des revendications précédentes, **caractérisé en ce que** le composant électropneumatique à commande électronique (24) comprend une seconde commande électronique (ECU-2, 29) ainsi qu'au moins un capteur de pression (29) qui détecte la pression de commande pneumatique primaire (SD1, SD2) et introduit des signaux de pression correspondants dans la seconde commande électronique (ECU-2, 29) qui génère en fonction des signaux de pression le signal de commande électrique secondaire (SS*).

12. Système de frein de service selon l'une quelconque des revendications précédentes, **caractérisé en ce que** le signal de commande électrique secondaire (SS*) dépend d'un signal de demande de freinage électrique secondaire (BAS*) qui représente un ralentissement de consigne de véhicule ou une valeur de consigne de pression.

13. Système de frein de service selon la revendication 12, **caractérisé en ce que** le signal de demande de freinage électrique secondaire (BAS*) peut être généré par un dispositif de pilotage automatique et/ou par un système d'aide à la conduite.

14. Système de frein de service selon l'une quelconque des revendications précédentes, **caractérisé en ce qu'**il présente au moins un module de régulation de pression qui présente au moins ce qui suit :
a) au moins un raccord de réserve de module de régulation de pression (36) pour la liaison avec une réserve d'air comprimé (C1, C2) se trouvant sous pression de réserve,
b) au moins une entrée de commande de module de régulation de pression électrique (30),
au moins une entrée de commande de module de régulation de pression pneumatique (31), au moins une sortie d'aération de module de régulation de pression (32) reliée à un puits de pression et au moins une sortie de travail de module de régulation de pression (34),
c) au moins un appareil de commande (29) électronique relié électriquement à l'entrée de commande de module de régulation de pression électrique (30),
d) au moins une combinaison de soupape d'entrée et de sortie (35) électromagnétique commandée par l'appareil de commande électronique (29) qui est reliée d'un côté au raccord de réserve de module de régulation pression (36) pour l'alimentation en pression de réserve et de l'autre côté à la sortie d'aération de module de régulation de pression (32) pour l'aération,
e) une soupape relais (38) commandée par la combinaison de soupape d'entrée et de sortie (35) électromagnétique par une pression de commande de relais pneumatique à son raccord de commande (37) pneumatique, soupape qui module une pression de travail en fonction de la pression de commande de relais de la pression de réserve à la sortie de travail de module de régulation de pression (34),
f) au moins un capteur de pression (39) qui détecte la pression de travail à la sortie de travail de module de régulation de pression (34) et introduit une valeur de pression réelle correspondante dans l'appareil de commande électronique (29),
g) une soupape de secours (40) électromagnétique qui est raccordée d'un côté à l'entrée de commande de module de régulation de pression pneumatique (31) et de l'autre côté au raccord de commande pneumatique (37) de la soupape relais (38) et qui bloque sous tension dans une position de blocage l'entrée de commande de module de régulation de pression pneumatique (31) par rapport au raccord de commande pneumatique (37) de la soupape relais (38) et relie hors tension dans une position de passage l'entrée de commande de module de régulation de pression pneumatique (31) au raccord de commande pneumatique (37) de la soupape relais (38), dans lequel
h) l'appareil de commande électronique (29) est formé afin qu'il commande la combinaison de soupape d'entrée et de sortie (35) électromagnétique de telle manière que la valeur de pression réelle soit régulée à une valeur de pression de consigne qui est représentée par un signal électrique commandable dans l'entrée de commande de module de régulation de pression (30).

15. Système de frein de service selon l'une quelconque des revendications 9 à 13 et selon la revendication 14, **caractérisé en ce que** le dispositif de soupape de commande (BCA) électropneumatique comprend au moins un module de régulation de pression, pour lequel
a) l'entrée de commande de module de régulation de pression pneumatique (31) forme l'entrée de pression de commande (25, 26) pour l'introduction de la pression de commande pneumatique primaire (SD1, SD2), et
b) la sortie de travail de module de régulation de pression (34) forme la sortie de pression de commande (27, 28) pour l'extraction de la pression de commande pneumatique secondaire (SD1*, SD2*),
c) le raccord de réserve de module de régulation de pression (36) est raccordé à au moins une réserve d'air comprimé (C2),
d) le signal de commande électrique secondaire (SS*) peut être introduit dans l'entrée de commande de module de régulation de pression électrique (30).

16. Système de frein de service selon la revendication 15, **caractérisé en ce que** le dispositif de soupape de commande électropneumatique (BCA) est formé de sorte que
a) lorsqu'aucun signal de commande électrique secondaire (SS*) n'est généré, la soupape de secours électromagnétique (40) passe dans la position de passage, dans lequel la soupape relais (38) génère ou forme alors la pression de commande pneumatique secondaire (SD1*, SD2*) en fonction de la pression de commande (SD1, SD2) pneumatique primaire à la sortie de travail de module de régulation de pression (34) et sinon,
b) lorsqu'un signal de commande électrique secondaire (SS*) est généré, la soupape de secours électromagnétique (40) passe dans la position de blocage et le signal de commande électrique secondaire (SS*) est introduit dans l'appareil de commande électronique (29) qui commande alors en fonction du signal de commande électrique secondaire (SS*) la combinaison de soupape d'entrée et de sortie (35) électromagnétique afin de générer ou de former par la soupape relais (38) à la sortie de travail de module de régulation de pression (34) la pression de commande pneumatique secondaire (SD1*, SD2*).

17. Système de frein de service selon la revendication 14 ou selon la revendication 14 et l'une quelconque des revendications 15 ou 16, **caractérisé en ce que** l'au moins une soupape de commande électropneumatique (1C-EPM, 2C-EPM, TCM) comprend un module de régulation de pression, pour lequel
a) l'entrée de commande de module de régulation de pression pneumatique (31) forme l'au moins une entrée de commande pneumatique (18, 19a, 19b, 20) pour l'introduction de la pression de commande pneumatique secondaire (SD1*, SD2*), et
b) la sortie de travail de module de régulation de pression (34) forme l'au moins une sortie de travail pneumatique (14, 15a, 15b, 21) pour l'extraction de la pression de freinage pour l'au moins un actionneur de frein de service (BZ1, BZ2, BZ3, BZ4),
c) le raccord de réserve de module de régulation de pression (36) est raccordé à au moins une réserve d'air comprimé (C1, C2),
d) l'entrée de commande de module de régulation de pression électronique (30) est raccordée à la première commande électronique (ECU-1) pour l'introduction du signal de commande électrique primaire (SS1, SS2, SST).

18. Système de frein de service selon l'une quelconque des revendications précédentes, **caractérisé en ce que** le composant électropneumatique à commande électronique (24) forme une redondance à commande électropneumatique lorsque la commande électrique de l'au moins une soupape de commande (1C-EPM, 2C-EPM, TCM) est empêchée par le signal de commande électrique primaire (SS1, SS2, SST) ou lorsqu'il n'est pas prévu de générer un signal de commande électrique primaire (SS1, SS2, SST).

19. Système de frein de service selon la revendication 1 et la revendication 15, **caractérisé en ce qu**'il comprend un système de frein de service à régulation électronique avec régulation de pression de freinage (EBS) qui est complété par le composant électropneumatique à commande électronique (24).

20. Système de frein de service selon l'une quelconque des revendications précédentes, **caractérisé en ce que** le composant électropneumatique à commande électroniquement (24) est formé de sorte qu'il génère des signaux de commande pour une commande d'une machine d'entraînement du véhicule et/ou pour une commande d'un retardateur.
